# EUROPEAN PATENT SPECIFICATION

(11) **EP 3 373 682 B1**
(45) Date of publication and mention of the grant of the patent: **08.09.2021**
(21) Application number: 16872259.3
(22) Date of filing: 02.11.2016
(51) Int. Cl.: H04W 74/08, H04W 72/02

(54) **DATA TRANSMISSION PROTECTION METHOD AND APPARATUS THEREOF**
DATENÜBERTRAGUNGSSCHUTZVERFAHREN UND VORRICHTUNG DAFÜR
PROCÉDÉ DE PROTECTION DE TRANSMISSION DE DONNÉES ET APPAREIL CORRESPONDANT

(30) Priority: 08.12.2015 CN 201510897813; 21.06.2016 CN 201610454706
(43) Date of publication of application: 12.09.2018
(73) Proprietor: Huawei Technologies Co., Ltd., Longgang District Shenzhen, Guangdong 518129 (CN)
(72) Inventor: LIU, Yingzhuang, Wuhan Hubei 430074 (CN); FAN, Weiwei, Shenzhen Guangdong 518129 (CN); LI, Yunbo, Shenzhen Guangdong 518129 (CN); LUO, Jun, Shenzhen Guangdong 518129 (CN); LIN, Yingpei, Shenzhen Guangdong 518129 (CN); LOC, Peter, Cupertino CA 95014 (US)
(74) Representative: Goddar, Heinz J.
(86) International application number: PCT/CN2016/104361
(87) International publication number: WO 2017/097067

(56) References cited:
- WO-A1-2015/050311
- CN-A- 1 462 524
- CN-A- 104 066 198
- CN-A- 104 883 711
- CN-A- 105 592 476
- US-A1- 2008 267 162
- US-B1- 8 971 350
- PO-KAI HUANG (INTEL): "NAV Consideration for UL MU Response Follow Up ; 11-15-1326-02-00ax-nav-consideration-for-u l-mu-response-follow-up", IEEE DRAFT; 11-15-1326-02-00AX-NAV-CONSIDERATION-FOR-U L-MU-RESPONSE-FOLLOW-UP, IEEE-SA MENTOR, PISCATAWAY, NJ USA, vol. 802.11ax, no. 2, 11 November 2015 (2015-11-11), pages 1-23, XP068099286, [retrieved on 2015-11-11]

## Description

### TECHNICAL FIELD

The present invention relates to the field of communications technologies, and in particular, to a data transmission protection method and apparatus.

### BACKGROUND

A channel access mechanism used for IEEE 802.11 MAC in an existing wireless local area network (Wireless local area network, WLAN) system is a carrier sense multiple access with collision avoidance (Carrier Sense Multiple Access with Collision Avoidance, CSMA/CA) mechanism. The mechanism may be used to detect and avoid a collision on a network when two or more network devices need to transmit data. A virtual carrier sensing mechanism in the CSMA/CA mechanism may control data transmission by using a network allocation vector (Network Allocation Vector, NAV) that is maintained by each station and that is used to record a time period in which the station occupies a channel.

Po-Kai Huang (Intel): "NAV Consideration for UL MU Response Follow Up; IEEE 802.11-15/1326r2, 11 November 2015, pp. 1-23, discloses a method for protecting existing Inter-BSS transmission under UL MU response by letting each STA maintain two NAVs. One NAV is set by inter-BSS frame, while another is set by intra-BSS frame.

US 8 971 350 B1 discloses a method of determining channel availability in a wireless communication network utilizing at least first and second sub-channels. A first sub-channel availability indicator is updated based on the first access control information. The first sub-channel availability indicator indicates expected utilization of the first sub-channel. A second sub-channel availability indicator is updated based on the second access control information. The second sub-channel availability indicator indicates expected utilization of the second sub-channel. A transmission channel is determined based on the first and second sub-channel availability indicators.

As the 802.11ax communications standard advances, a 5 GHz transmission bandwidth provided in the communications standard has more abundant channel transmission bandwidth resources than 2.4 GHz. The channel transmission bandwidth resources may be divided into a plurality of subchannel transmission bandwidths. An access point may allocate the subchannel transmission bandwidths to different stations, and use a trigger frame to schedule a plurality of stations to simultaneously transmit data on different subchannel transmission bandwidths. According to the existing virtual carrier sensing mechanism in the 802.11 standard, a station may ignore relatively small duration that is included in a physical layer convergence procedure (physical layer convergence procedure, PLCP) protocol data unit (physical layer convergence procedure (PLCP) protocol data unit, PPDU) received by the station and whose sending target does not include the station, and maintain a current value of an NAV of the station. In this case, if a trigger frame sent by an associated access point in a basic service set (Basic Service Set, BSS) is received, interference may be caused to data transmission in an overlapping basic service set (Overlapping Basic Service Set, OBSS) because of a response to the trigger frame. In addition, in the prior art, data transmission on all subchannel frequency bands in an entire channel transmission bandwidth is usually controlled by using a single NAV. When receiving a scheduling frame on a frequency band, a target station may update a current value of the NAV based on duration greater than the current value. The target station may be unable to transmit data on the current frequency band even when an adjacent station or an access point does not occupy the current frequency band, because the current value of the NAV does not meet a preset threshold. This greatly reduces frequency band utilization.

### SUMMARY

The invention is defined by the appended claims.

In a first aspect, the invention provides a data transmission protection method, comprising: setting, by a station, two network allocation vectors, NAVs, including one intra-NAV and one inter-NAV, on all subchannel frequency bands in a channel bandwidth of a basic service set, BSS, associated with the station; receiving, by a station, a physical layer convergence procedure protocol data unit, PPDU; and selecting, by the station, all channel transmission bandwidth as available frequency bands and determining a frequency domain resource in the all channel transmission bandwidth to send a data frame to respond to the PPDU based on a frequency domain resource scheduling information in a trigger frame when a current value of an inter-NAV is equal to 0, the PPDU includes the trigger frame sent by an access point in the basic service set, BSS, associated with the station and a scheduling target of the PPDU includes the station; and updating a current value of the intra-NAV to 0, when the PPDU includes a received contention free-end, CF-END, frame that comes from the BSS; and updating a current value of the inter-NAV to 0, when the PPDU includes a received contention free-end, CF-END, frame that comes from an overlapping basic service set, OBSS; wherein two network allocation vectors, NAVs, the intra-NAV and the inter-NAV, are set on all channel transmission bandwidth of the BSS; the intra-NAV is used to record duration in which the BSS forbids the station to transmit data on the all channel transmission bandwidth, and the inter-NAV is used to record duration in which a OBSS forbids the station to transmit data on the all channel transmission bandwidth.

In a second aspect, the invention provides a data transmission protection apparatus, comprising: a setting unit, configured to set two network allocation vectors, NAVs, including one intra-NAV and one inter-NAV, on all subchannel frequency bands in a channel bandwidth of a basic service set, BSS, associated with the apparatus; a receiving unit, configured to receive a PPDU; and a responding unit, configured to select, all channel transmission bandwidth as available frequency bands and determine a frequency domain resource in the all channel transmission bandwidth to send a data frame to respond to the PPDU based on a frequency domain resource scheduling information in a trigger frame when a current value of an inter-NAV is equal to 0, the PPDU includes the trigger frame sent by an access point in the basic service set, BSS, associated with the apparatus and a scheduling target of the PPDU includes the apparatus; an updating unit, configured to update a current value of the intra-NAV to 0, when the PPDU is a received contention free-end, CF-END, frame comes from the BSS; the updating unit, configured to update a current value of the inter-NAV to 0, when the PPDU is a received contention free-end, CF-END, frame comes from an OBSS; wherein two network allocation vectors, NAVs, the intra-NAV and the inter-NAV, are set on all channel transmission bandwidth of the BSS; the intra-NAV is used to record duration in which the BSS forbids the station to transmit data on the all channel transmission bandwidth, and the inter-NAV is used to record duration in which a OBSS forbids the station to transmit data on the all channel transmission bandwidth.

In a third aspect, the invention provides a computer-readable storage medium comprising instructions which, when executed by a computer, cause the computer to carry out the above-described method.

Preferred embodiments are defined in the dependent claims.

In the embodiments of the present invention, the trigger frame sent by the access point in the BSS associated with the station may be received. The available subchannel frequency band for data transmission is selected from the channel transmission bandwidth of the BSS based on the current values of the at least two network allocation vectors NAVs that are set on the subchannel frequency band in the channel transmission bandwidth of the BSS, to respond to the trigger frame. This reduces interference in data transmission. In addition, NAVs may be respectively set for different channel transmission bandwidths to avoid wasting frequency band resources and improve frequency band utilization.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic structural diagram of a WLAN disclosed in an embodiment of the present invention;
FIG. 2 is a schematic diagram of channel access contention disclosed in an embodiment of the present invention;
FIG. 3 is a schematic flowchart of a data transmission protection method disclosed in an embodiment of the present invention;
FIG. 4 is a schematic flowchart of another data transmission protection method disclosed in an embodiment of the present invention;
FIG. 5 is a schematic flowchart of still another data transmission protection method disclosed in an embodiment of the present invention;
FIG. 6 is a schematic flowchart of still another data transmission protection method disclosed in an embodiment of the present invention;
FIG. 7 is a schematic flowchart of still another data transmission protection method disclosed in an embodiment of the present invention;
FIG. 8 is a schematic flowchart of still another data transmission protection method disclosed in an embodiment of the present invention;
FIG. 9 is a schematic flowchart of still another data transmission protection method disclosed in an embodiment of the present invention;
FIG. 10 is a schematic flowchart of still another data transmission protection method disclosed in an embodiment of the present invention;
FIG. 11 is a schematic modular diagram of a data transmission protection apparatus disclosed in an embodiment of the present invention; and
FIG. 12 is a schematic structural diagram of a data transmission protection apparatus disclosed in an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

In the embodiments of the present invention, a channel transmission bandwidth may include 20 MHz, 40 MHz, 80 MHz, 160 MHz, or the like. If 20 MHz is used as a minimum unit of a channel transmission frequency band, the entire channel transmission bandwidth may be divided into a plurality of subchannel frequency bands, and one or more corresponding NAVs may be set based on the subchannel frequency bands. In the embodiments, a source of a current value of an NAV, an intra-NAV, or an inter-NAV is a BSS or an OBSS from which a PPDU that is used to set a current NAV, intra-NAV, or inter-NAV comes. It should be noted that, in the embodiments of the present invention, a preset value may be 0 or may be set as required; the scheduling target may be determined based on a signaling B part in a data frame or a scheduling identifier in resource indication information in a trigger frame; the sending target may be determined based on a receiver address in a PPDU.

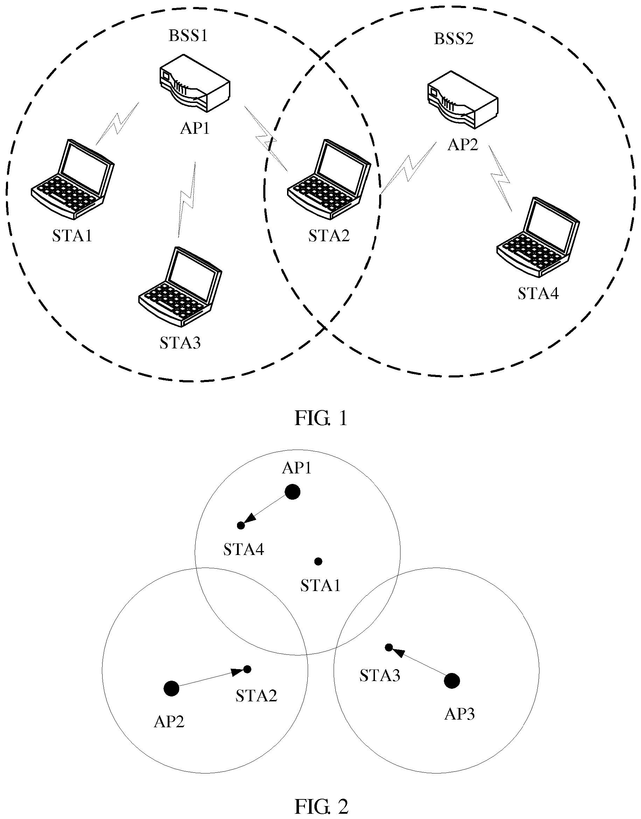

To facilitate understanding of the embodiments of the present invention, the following first describes a schematic structural diagram of a WLAN in an embodiment of the present invention. Referring to FIG. 1, FIG. 1 is a schematic structural diagram of a WLAN disclosed in an embodiment of the present invention. A basic component of a WLAN based on IEEE 802.11 technologies is a BSS. The BSS includes an access point (Access Point, AP) and a plurality of stations (Station, STA). The access point AP may be a base station, a router, a switch, or the like, and may be configured to schedule a STA in a range of the BSS. The station STA may be a wireless access device such as a notebook computer, a wireless speaker, and a smartphone, and may be configured to respond to scheduling of the access point AP in the BSS. In FIG. 1, two adjacent BSSs, namely a BSS1 and a BBS2, are OBSSs of each other, and share different subchannel frequency bands in a channel transmission bandwidth. STA1 to STA3 are stations in the BSS1, and an API is an access point in the BSS1. A STA4 is a station in the BSS2, and an AP2 is an access point in the BSS2. The STA2 is located in an overlapping area of the BSS1 and the BSS2, and can listen and detect data frames sent by the API in the BSS1 and by a station or an access point near the STA2 in the BSS2.

The IEEE 802.11 working group has established the High Efficiency WLAN Study Group (High Efficiency WLAN Study Group, HEW SG) and the 802.11ax working group to upgrade a transmission bandwidth from 2.4 GHz to 5 GHz. An AP may divide an entire channel transmission bandwidth into different subchannel frequency bands, and allocate the different subchannel frequency bands to different STAs. A trigger frame sent by an access point in a BSS is used to schedule a plurality of STAs, so that data is simultaneously transmitted on a plurality of different frequency bands. According to the existing 802.11 standard, a STA may ignore relatively small duration included in a trigger frame from an OBSS, and maintain a timer, that is an NAV of the STA. When the STA responds to a currently received scheduling frame from a BSS, interference may be caused to data transmission in the OBSS. As shown in FIG. 1, when receiving a trigger frame that is sent by the API and that uses the STA2 as a scheduling target, the STA2 sets an NAV based on duration1 in the trigger frame. If a data frame is received from the STA4 and duration2 carried in the frame is less than a current value of the NAV, the NAV remains as the current duration1. In a time period shorter than the duration1, if the STA2 receives another trigger frame that is sent by the API and that uses the STA2 as a scheduling target, the STA2 responds to the trigger frame sent by the API. In this case, a data frame sent by the STA2 to the API may be received by the STA4 that is performing data transmission, causing interference to data transmission in the OBSS.

In addition, because an AP in each BSS may use a different frequency band to schedule a STA, using a single timer NAV in the existing 802.11 standard to manage scheduling on a plurality of subchannel frequency bands may waste resources. FIG. 2 is a schematic diagram of channel access contention. As shown in FIG. 2, if a channel transmission bandwidth is divided into subchannel frequency bands 1 to 4, when an AP2 in an OBSS schedules a STA2 on the subchannel frequency band 4 and an AP3 schedules a STA3 on the frequency band 1, a STA1 may set an NAV based on maximum duration in a response data frame of the STA2 or the STA3. Because the entire bandwidth has only one NAV, even if an access point or a station adjacent to the STA1 does not occupy the subchannel frequency bands 2 and 3, the STA1 still cannot perform uplink data transmission with an API on the frequency bands 2 and 3, because a value of the NAV is a non-idle value. This wastes resources.

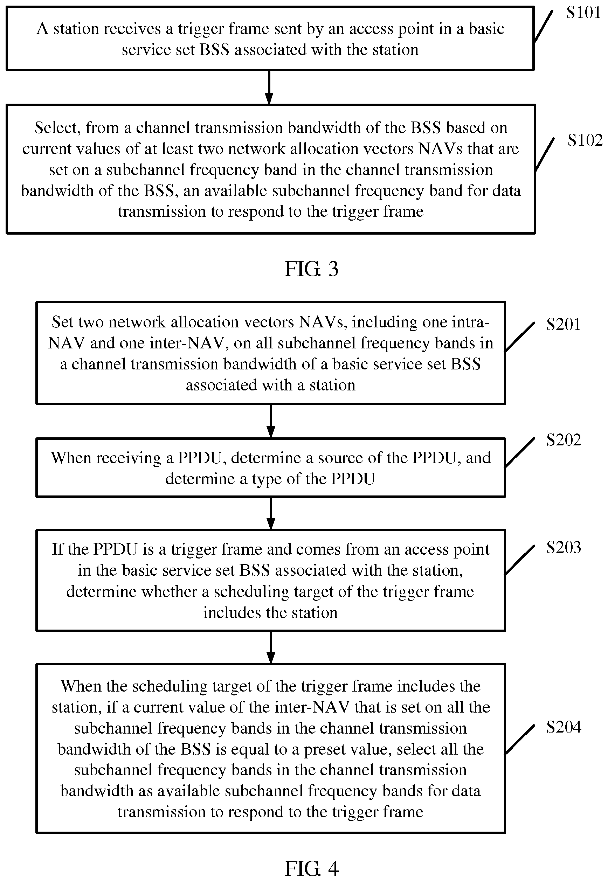

The foregoing describes an existing problem with reference to the schematic structural diagram of the WLAN in FIG. 1 and the schematic diagram of channel access contention in FIG. 2. The following further describes a method disclosed in an embodiment of the present invention. Referring to FIG. 3, FIG. 3 is a schematic flowchart of a data transmission protection method disclosed in an embodiment of the present invention. The method may include steps S101 and S102.

S101. A station receives a trigger frame sent by an access point in a basic service set BSS associated with the station.

In a specific embodiment, the station receives the trigger frame sent by the access point in the basic service set BSS associated with the station. When detecting a PPDU sent by the access point in the basic service set BSS associated with the station, the station may determine whether the PPDU is a trigger frame. If yes, the station receives the trigger frame.

S102. Select, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame.

In the specific embodiment, the station selects, from the channel transmission bandwidth of the BSS based on the current values of the at least two network allocation vectors NAVs that are set on the subchannel frequency band in the channel transmission bandwidth of the BSS, the available subchannel frequency band for data transmission to respond to the trigger frame. An NAV is used during virtual carrier sensing, and may be equivalent to a counter used to virtually reflect a busy state or an idle state of a channel. In this embodiment of the present invention, at least two NAVs are set on the subchannel frequency band in the channel transmission bandwidth of the BSS associated with the station, and are used to control channel access contention to protect data transmission.

In this embodiment of the present invention, it may be agreed that when a value of an NAV is 0, data is allowed to be transmitted on an available subchannel frequency band; and when a value of an NAV is not 0, it indicates that data is not allowed to be transmitted on an available subchannel frequency band. A station STA1 may maintain two types of NAVs, including an intra-NAV and an inter-NAV, on all subchannel frequency bands in a channel transmission bandwidth. The intra-NAV is used to maintain an NAV of a BSS, and the inter-NAV is used to maintain an NAV of an OBSS. In addition, current values of the intra-NAV and the inter-NAV are obtained. If inter-NAV = 0, all the subchannel frequency bands in the channel transmission bandwidth of the BSS may be selected as available subchannel frequency bands. Data is allowed to be transmitted on all the subchannel frequency bands. Alternatively, one NAV may be maintained on each subchannel frequency band in at least two subchannel frequency bands in the entire channel transmission bandwidth, or two types of NAVs, including an intra-NAV and an inter-NAV, are maintained on each subchannel frequency band in at least two subchannel frequency bands. In addition, current values of the NAVs are obtained.

To reduce data transmission collisions and interference in channel access contention, an NAV is set on all the subchannel frequency bands in the channel transmission bandwidth of the BSS or on each subchannel frequency band in the channel transmission bandwidth. To distinguish NAV sources, NAVs may be further classified into an intra-NAV that is set by the associated BSS and an inter-NAV that is set by the OBSS. Based on a current value of an NAV, an available subchannel frequency band can be selected from the subchannel frequency band in the channel transmission bandwidth to send a data frame such as an uplink data frame. For example, two NAVs, including one intra-NAV and one inter-NAV, are set on all the subchannel frequency bands in the channel transmission bandwidth. If inter-NAV = 0, it indicates that no data transmission is currently performed by a node such as an access point or a station that may interfere with the station in the OBSS. All the subchannel frequency bands in the channel transmission bandwidth are selected as available subchannel frequency bands. Data is allowed to be transmitted on the available subchannel frequency bands.

In this embodiment of the present invention, the trigger frame sent by the access point in the BSS associated with the station may be received. The available subchannel frequency band for data transmission is selected from the channel transmission bandwidth of the BSS based on the current values of the at least two network allocation vectors NAVs that are set on the subchannel frequency band in the channel transmission bandwidth of the BSS, to respond to the trigger frame. This reduces interference in data transmission. In addition, NAVs may be respectively set for different channel transmission bandwidths to avoid wasting frequency band resources and improve frequency band utilization.

Referring to FIG. 4, FIG. 4 is a schematic flowchart of another data transmission protection method disclosed in an embodiment of the present invention. The method includes steps S201 to S204.

S201. Set two network allocation vectors NAVs, including one intra-NAV and one inter-NAV, on all subchannel frequency bands in a channel transmission bandwidth of a basic service set BSS associated with a station.

In a specific embodiment, two NAVs, including one intra-NAV and one inter-NAV, are set on all the subchannel frequency bands in the channel transmission bandwidth of the basic service set BSS associated with the station. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on all the subchannel frequency bands in the channel transmission bandwidth. For example, as shown in FIG. 2, one intra-NAV and one inter-NAV are set on all the subchannel frequency bands in the entire channel transmission bandwidth. It is assumed that initial values of the intra-NAV and the inter-NAV are both 0. If the access point API in a BSS associated with the station STA1 sends a PPDU to the STA4, the STA1 may also receive the PPDU. The STA1 may obtain a duration = 10 in the PPDU that is not sent to the STA1, and set intra-NAV = 10 based on the duration. When receiving a PPDU that is sent by the STA2 and that carries duration = 4, the STA1 may set inter-NAV = 4. It should be noted that the intra-NAV and the inter-NAV may be updated based on the duration value in the received PPDU and a frame source. The duration value needs to be greater than a current value of a corresponding NAV for updating the NAV. For example, if the STA1 simultaneously receives a PPDU that is sent by the STA2 and that carries duration 1 = 4 and a PPDU that is sent by the STA3 and that carries duration2 = 6, the STA1 may set inter-NAV = 6 because duration2 > duration1.

S202. When receiving a PPDU, determine a source of the PPDU, and determine a type of the PPDU.

In a specific implementation, when receiving a PPDU, the station determines a source of the PPDU, and determines a type of the PPDU. In this embodiment of the present invention, the PPDU may include a plurality of types such as a data frame, a trigger frame, and a CF-END frame. The PPDU may be sent by any node such as an access point or a station in the BSS or the OBSS. For example, when receiving a PPDU, the STA2 learns whether the PPDU is a trigger frame or a CF-END frame by parsing a frame type field in a MAC header of the PPDU. If the PPDU is a trigger frame, a source of the trigger frame may be determined by parsing a TA field in a MAC field of the trigger frame. If the PPDU is a CF-END frame, a source of the CF-END frame may be determined by parsing a BSSID field in a MAC field of the CF-END frame.

S203. If the PPDU is a trigger frame and comes from an access point in the basic service set BSS associated with the station, determine whether a scheduling target of the trigger frame includes the station.

In the specific implementation, if the PPDU is a trigger frame and comes from the access point in the BSS associated with the station, the station determines whether the scheduling target of the trigger frame includes the station. In this embodiment of the present invention, whether the scheduling target of the trigger frame includes the station may be determined by matching a station identifier in resource indication information in the MAC field of the trigger frame and an AID value that is configured by the AP during association. If the station identifier matches the AID value, it indicates that the scheduling target of the trigger frame includes the station.

S204. When the scheduling target of the trigger frame includes the station, if a current value of the inter-NAV that is set on all the subchannel frequency bands in the channel transmission bandwidth of the BSS is equal to a preset value, select all the subchannel frequency bands in the channel transmission bandwidth as available subchannel frequency bands for data transmission, and determine a frequency domain resource, used by the station for transmission, in the available subchannel frequency bands based on frequency domain resource scheduling information in the trigger frame to send a data frame on the determined frequency domain resource.

In the specific implementation, when the scheduling target of the trigger frame includes the station, if the current value of the inter-NAV that is set on all the subchannel frequency bands in the channel transmission bandwidth of the BSS is equal to the preset value, all the subchannel frequency bands in the channel transmission bandwidth are selected as available subchannel frequency bands for data transmission. In addition, the frequency domain resource used by the station for transmission is determined in the available subchannel frequency bands based on the frequency domain resource scheduling information in the trigger frame, so that the data frame is sent on the determined frequency domain resource. In this embodiment of the present invention, if the channel transmission bandwidth is 80 MHz, all the subchannel frequency bands in the channel transmission bandwidth are 80 MHz. One intra-NAV and one inter-NAV may be set on the 80 MHz. If it is agreed that 0 indicates that data is allowed to be transmitted on an available subchannel frequency band, and a value other than 0 indicates that data is not allowed to be transmitted on an available subchannel frequency band, when inter-NAV = 0, it may be determined that all the subchannel frequency bands in the channel transmission bandwidth are available subchannel frequency bands. The frequency domain resource used by the station for transmission is determined in the available subchannel frequency bands based on the frequency domain resource scheduling information in the trigger frame, so that the data frame is sent on the determined frequency domain resource.

The STA2 in FIG. 2 is used as an example. The AP2 is an access point associated with the STA2. When needing to schedule the STA2 to transmit data, the AP2 may send a trigger frame to the STA2. A scheduling target of the trigger frame points at the STA2. The STA2 determines whether all the subchannel frequency bands in the channel transmission bandwidth are available subchannel frequency bands based on a current value of an inter-NAV in two NAVs that are maintained by the AP2. If inter-NAV = 0, all the subchannel frequency bands in the channel transmission bandwidth are selected as available subchannel frequency bands. The station may determine the frequency domain resource, used by the station for transmission, in the available subchannel frequency bands based on the frequency domain resource scheduling information in the trigger frame. For example, the available subchannel frequency bands are a frequency band 2 and a frequency band 3. The station may determine that the frequency domain resource used by the station for transmission is 4 MHz in the frequency band 2 based on a 4 MHz bandwidth resource in the frequency band 2 that is required to be used in the trigger frame, and send the data frame on the 4 MHz to respond to the trigger frame.

Optionally, a precondition for sending the data frame such as an uplink data frame on all the subchannel frequency bands in the channel transmission bandwidth further includes determining that current signal strength is less than a clear channel assessment (CCA, Clear Channel Assessment) threshold or an OBSS packet detection level (OBSS packet detection level) threshold.

After performing step S202, the station may further perform a step of updating a current value of an NAV. In this embodiment of the present invention, the intra-NAV or the inter-NAV may be selected, by determining the source of the PPDU, for updating.

Optional step A: Obtain a duration in the PPDU if the PPDU comes from the basic service set BSS associated with the station and the station is not a sending target of the PPDU.

If a current value of the intra-NAV that is set on all the subchannel frequency bands in the channel transmission bandwidth is less than the duration, the current value of the intra-NAV is updated to the duration.

In the specific implementation, if the PPDU comes from the BSS associated with the station and the PPDU is not sent to the station, the station may parse the PPDU to obtain the duration. If the current value of the intra-NAV is less than the duration, the current value of the intra-NAV may be updated. For example, as shown in FIG. 2, the API sends a data frame pointing at the STA4. The STA1 receives the data frame, and parses the data frame to obtain duration = 10. In this case, if intra-NAV = 5, the current value of the intra-NAV may be updated to 10.

Optionally, a duration in the PPDU is obtained if the PPDU comes from an overlapping basic service set OBSS.

When one inter-NAV is set on all the subchannel frequency bands, if the current value of the inter-NAV that is set on all the subchannel frequency bands in the channel transmission bandwidth is less than the duration, the current value of the inter-NAV is updated to the duration.

In the specific implementation, if the PPDU comes from the OBSS, the station may parse the PPDU to obtain the duration. If the current value of the inter-NAV is less than the duration, the current value of the inter-NAV may be updated. For example, as shown in FIG. 2, the AP2 sends a data frame to the STA2. The STA1 receives the data frame, and parses the data frame to obtain duration = 10. In this case, if inter-NAV = 5, the current value of the inter-NAV may be updated to 10.

After performing step S202, the station may further perform a step of processing a CF-END frame. In this embodiment of the present invention, whether the type of the PPDU is a CF-END frame may be determined. If yes, the current value of the intra-NAV or the current value of the inter-NAV may be updated by determining a source of the CF-END frame. In this embodiment of the present invention, the preset value may be 0.

Optional step B: If a received contention free-end CF-END frame comes from the BSS, update the current value of the intra-NAV that is set by the station on all the subchannel frequency bands in the channel transmission bandwidth of the BSS, to the preset value.

In the specific implementation, if the CF-END frame comes from the BSS, the current value of the intra-NAV may be updated to the preset value 0 to clear the current value of the intra-NAV.

Optionally, if a received contention free-end CF-END frame comes from an overlapping basic service set OBSS, the current value of the inter-NAV that is set by the station on all the subchannel frequency bands in the channel transmission bandwidth of the BSS is updated to the preset value.

In the specific implementation, if the CF-END frame comes from the OBSS, the current value of the inter-NAV may be updated to the preset value 0 to clear the current value of the inter-NAV.

Further, optionally, if the received CF-END frame comes from the OBSS, it is determined whether a source of the current value of the inter-NAV that is set by the station on all the subchannel frequency bands in the channel transmission bandwidth of the BSS is the same as the source of the CF-END frame. If yes, the current value of the inter-NAV is updated to the preset value. For example, the CF-END frame comes from an OBSS2. If the current value of the inter-NAV that is set by the station on all the subchannel frequency bands in the channel transmission bandwidth of the BSS also comes from the OBSS, the current value of the inter-NAV may be updated to the preset value 0.

In this embodiment of the present invention, the station sets one intra-NAV and one inter-NAV on all the subchannel frequency bands in the channel transmission bandwidth of the associated BSS. When the PPDU is a trigger frame, the available subchannel frequency band for data transmission may be obtained based on the current values of the intra-NAV and the inter-NAV to respond to the trigger frame. In this way, data transmission is protected. Compared with using a single NAV, this reduces interference in data transmission. The intra-NAV or the inter-NAV is separately updated based on the source of the PPDU or the source of the CF-END frame to avoid incorrectly updating or clearing an NAV.

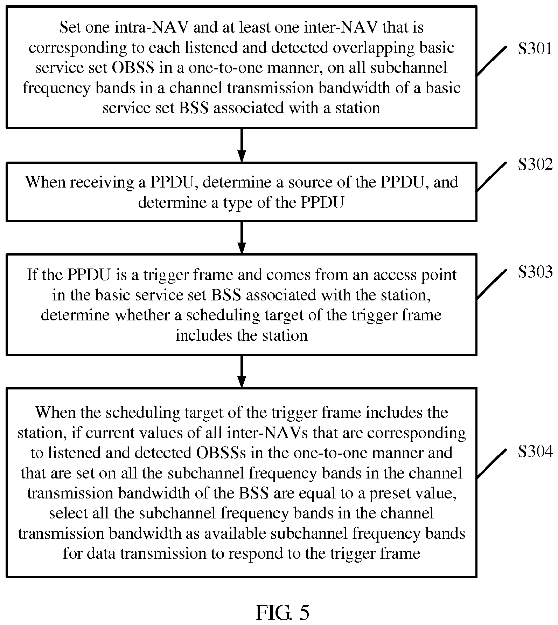

Referring to FIG. 5, FIG. 5 is a schematic flowchart of still another data transmission protection method disclosed in an embodiment of the present invention. The method includes steps S301 to S304.

S301. Set one intra-NAV and at least one inter-NAV that is corresponding to each listened and detected overlapping basic service set OBSS in a one-to-one manner, on all subchannel frequency bands in a channel transmission bandwidth of a basic service set BSS associated with a station.

In a specific embodiment, one intra-NAV and at least one inter-NAV that is corresponding to each listened and detected overlapping basic service set OBSS in the one-to-one manner are set on all the subchannel frequency bands in the channel transmission bandwidth of the basic service set BSS associated with the station. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on all the subchannel frequency bands in the channel transmission bandwidth. For example, as shown in FIG. 2, it is assumed that the station STA1 can listen and detect two OBSSs. One intra-NAV and two inter-NAVs may be set on all the subchannel frequency bands in the entire channel transmission bandwidth. An OBSS1 and an OBSS2 are corresponding to an inter-NAV 1 and an inter-NAV2, respectively. It is assumed that initial values of the intra-NAV and the inter-NAVs are all 0. If the access point API in a BSS in which the station STA1 is located sends a PPDU to the STA4, the STA1 may also receive the PPDU. If it is obtained through parsing that duration in the PPDU is 10, intra-NAV = 10 may be set. If the STA1 simultaneously receives a PPDU that is sent by the STA2 in the OBSS1 and that carries duration 1 = 4 and a PPDU that is sent by the STA3 in the OBSS2 and that carries duration2 = 6, the STA1 may set inter-NAV1 = 4 and inter-NAV2 = 6.

S302. When receiving a PPDU, determine a source of the PPDU, and determine a type of the PPDU.

In a specific implementation, for step S302 in this embodiment of the present invention, refer to step S202 shown in FIG. 4. Details are not described herein again.

S303. If the PPDU is a trigger frame and comes from an access point in the basic service set BSS associated with the station, determine whether a scheduling target of the trigger frame includes the station.

In the specific implementation, for step S303 in this embodiment of the present invention, refer to step S203 shown in FIG. 4. Details are not described herein again.

S304. When the scheduling target of the trigger frame includes the station, if current values of all inter-NAVs that are corresponding to listened and detected OBSSs in the one-to-one manner and that are set on all the subchannel frequency bands in the channel transmission bandwidth of the BSS are equal to a preset value, select all the subchannel frequency bands in the channel transmission bandwidth as available subchannel frequency bands for data transmission, and determine a frequency domain resource, used by the station for transmission, in the available subchannel frequency bands based on frequency domain resource scheduling information in the trigger frame to send a data frame on the determined frequency domain resource.

In the specific implementation, when the scheduling target of the trigger frame includes the station, if the current values of all the inter-NAVs that are corresponding to the listened and detected OBSSs in the one-to-one manner and that are set on all the subchannel frequency bands in the channel transmission bandwidth of the BSS are equal to the preset value, all the subchannel frequency bands in the channel transmission bandwidth are selected as available subchannel frequency bands for data transmission to respond to the trigger frame. In this embodiment of the present invention, if the channel transmission bandwidth is 80 MHz, all the subchannel frequency bands in the channel transmission bandwidth are 80 MHz. One intra-NAV and a same quantity of inter-NAVs as the listened and detected OBSSs may be set on the 80 MHz. If it is agreed that 0 indicates that data is allowed to be transmitted on an available subchannel frequency band, and a value other than 0 indicates that data is not allowed to be transmitted on an available subchannel frequency band, when all N (N is a natural number) inter-NAVs corresponding to N OBSSs are equal to 0, it may be determined that all the subchannel frequency bands in the channel transmission bandwidth are available subchannel frequency bands for data transmission. The station may determine the frequency domain resource, used by the station for transmission, in the available subchannel frequency bands based on the available subchannel frequency bands for data transmission and based on the frequency domain resource scheduling information in the trigger frame to send the data frame on the determined frequency domain resource.

Use the STA1 in FIG. 2 as an example. It is assumed that there are two OBSSs: an OBSS1 and an OBSS2, and an inter-NAV1 and an inter-NAV2 are set correspondingly. The API is an access point associated with the STA1. The API sends a trigger frame whose scheduling target points at the STA4, and duration in the trigger frame is 4. It is assumed that intra-NAV = 4 when the duration in the trigger frame is 4. In this case, if the STA2 and the STA3 send data frames carrying duration1 = 3 and duration2 = 5 respectively, inter-NAV1 = 3 and inter-NAV2 = 5. All the subchannel frequency bands in the channel transmission bandwidth can be selected as available subchannel frequency bands only when both the inter-NAV1 and the inter-NAV2 are 0. The station may determine the frequency domain resource, used by the station for transmission, in the available subchannel frequency bands based on the frequency domain resource scheduling information in the trigger frame. For example, the available subchannel frequency bands are a frequency band 2 and a frequency band 3. The station may determine that the frequency domain resource used by the station for transmission is 4 MHz in the frequency band 2 based on a 4 MHz bandwidth resource in the frequency band 2 that is required to be used in the trigger frame, and send the data frame on the 4 MHz to respond to the trigger frame.

Optionally, a precondition for sending the data frame such as an uplink data frame on all the subchannel frequency bands in the channel transmission bandwidth further includes determining that current signal strength is less than a CCA threshold or an OBSS packet detection level threshold.

After performing step S302, the station may further perform a step of updating a current value of an NAV. In this embodiment of the present invention, the intra-NAV or the inter-NAV may be selected, by determining the source of the PPDU, for updating.

Optionally, a duration in the PPDU is obtained if the PPDU comes from the basic service set BSS associated with the station and the station is not a sending target of the PPDU.

If a current value of the intra-NAV that is set on all the subchannel frequency bands in the channel transmission bandwidth is less than the duration, the current value of the intra-NAV is updated to the duration.

In the specific implementation, for the step in this embodiment of the present invention, refer to step A performed after step S202 shown in FIG. 4. Details are not described herein again.

Optionally, a duration in the PPDU is obtained if the PPDU comes from an overlapping basic service set OBSS.

When at least one inter-NAV that is corresponding to an OBSS listened and detected by the station in the one-to-one manner is set on all the subchannel frequency bands, if a current value of an inter-NAV that is corresponding to the OBSS from which the PPDU carrying the duration comes is less than the duration, the inter-NAV that is corresponding to the OBSS from which the PPDU carrying the duration comes is updated to the duration.

In the specific implementation, if the PPDU comes from the overlapping basic service set OBSS, the station obtains the duration value duration in the PPDU. When at least one inter-NAV that is corresponding to an OBSS listened and detected by the station in the one-to-one manner is set on all the subchannel frequency bands, if the current value of the inter-NAV that is corresponding to the OBSS from which the PPDU carrying the duration comes is less than the duration, the station updates the inter-NAV that is corresponding to the OBSS from which the PPDU carrying the duration comes to the duration.

For example, it is assumed that there are two OBSSs. The inter-NAV1 and the inter-NAV2 that are corresponding to the OBSS1 and the OBSS2 respectively are set on all the subchannel frequency bands. If the PPDU comes from the OBSS2 and duration = 10 in the PPDU, and current values of the inter-NAV1 and the inter-NAV2, namely inter-NAV1 = 3 and inter-NAV2=6, come from the OBSS1 and the OBSS2 respectively, the current value of the inter-NAV2 may be updated to 10, and the inter-NAV1 is not updated, because the current value of the inter-NAV2 has a same source as the PPDU and inter-NAV2 < duration.

After performing step S302, the station may further perform a step of processing a CF-END frame. In this embodiment of the present invention, whether the type of the PPDU is a CF-END frame may be determined. If yes, the current value of the intra-NAV or the current value of the inter-NAV may be updated by determining a source of the CF-END frame. In this embodiment of the present invention, the preset value may be 0.

Optionally, if a received contention free-end CF-END frame comes from the BSS, the current value of the intra-NAV that is set by the station on all the subchannel frequency bands in the channel transmission bandwidth of the BSS is updated to the preset value.

Optionally, if a received contention free-end CF-END frame comes from an overlapping basic service set OBSS, a current value of an inter-NAV that is set by the station on all the subchannel frequency bands in the channel transmission bandwidth of the BSS is updated to the preset value.

In the specific implementation, for the step in this embodiment of the present invention, refer to step B performed after step S202 shown in FIG. 4. Details are not described herein again.

Further, optionally, if a received contention free-end CF-END frame comes from an overlapping basic service set OBSS, a current value of an inter-NAV that is corresponding to the OBSS from which the CF-END frame comes and that is set by the station on all the subchannel frequency bands in the channel transmission bandwidth of the BSS is updated to the preset value.

In the specific implementation, if the received CF-END frame comes from the OBSS, the current value of the inter-NAV that is corresponding to the OBSS from which the CF-END frame comes and that is set by the station on all the subchannel frequency bands in the channel transmission bandwidth of the BSS is updated to the preset value. For example, the CF-END frame comes from the OBSS2. If the OBSS2 is corresponding to the inter-NAV2, the inter-NAV2 is updated to the preset value, and another inter-NAV is not updated.

In this embodiment of the present invention, based on the foregoing embodiment, an inter-NAV setting manner is changed from setting one inter-NAV to setting at least one inter-NAV that is corresponding to each listened and detected OBSS in the one-to-one manner, on all the subchannel frequency bands. This not only reduces interference in an OBSS and avoids incorrectly updating or clearing an NAV, but also provides a method for clearing and updating an inter-NAV for a specific OBSS.

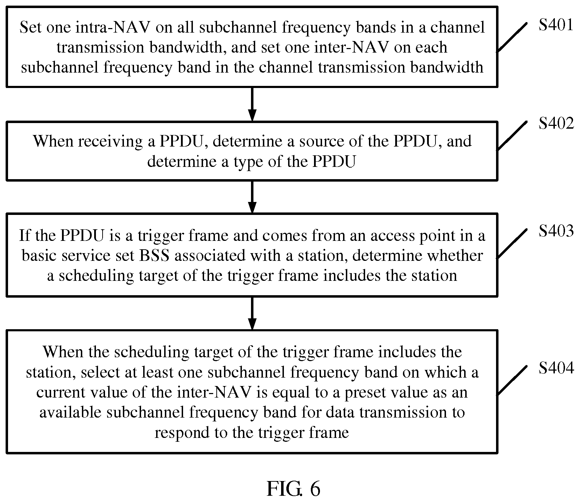

Referring to FIG. 6, FIG. 6 is a schematic flowchart of still another data transmission protection method disclosed in an embodiment of the present invention. The method includes steps S401 to S404.

S401. Set one intra-NAV on all subchannel frequency bands in a channel transmission bandwidth, and set one inter-NAV on each subchannel frequency band in the channel transmission bandwidth.

In a specific embodiment, a station sets one intra-NAV on all the subchannel frequency bands in the channel transmission bandwidth, and sets one inter-NAV on each subchannel frequency band in the channel transmission bandwidth. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on a subchannel frequency band on which the inter-NAV is set. For example, as shown in FIG. 2, it is assumed that the entire channel transmission bandwidth is divided into four subchannel frequency bands: frequency bands 1 to 4. One intra-NAV and four inter-NAVs may be set on the frequency bands 1 to 4. Inter-NAV1 to inter-NAV4 are set on the frequency bands 1 to 4, respectively. Initial values of the intra-NAV and all the inter-NAVs are 0. If the access point API in a BSS associated with the station STA1 sends a PPDU to the STA4, the STA1 also receives the PPDU. If it is obtained through parsing that duration in the PPDU is 10, intra-NAV = 4 may be set. If the STA1 simultaneously receives a PPDU that is sent by the STA2 in the OBSS, that carries duration = 4, and that specifies subchannel frequency bands as frequency bands 1 and 2, inter-NAV1 = 4 and inter-NAV2 = 4 may be set.

S402. When receiving a PPDU, determine a source of the PPDU, and determine a type of the PPDU.

In a specific implementation, for step S402 in this embodiment of the present invention, refer to step S202 shown in FIG. 4. Details are not described herein again.

S403. If the PPDU is a trigger frame and comes from an access point in a basic service set BSS associated with a station, determine whether a scheduling target of the trigger frame includes the station.

In the specific implementation, for step S403 in this embodiment of the present invention, refer to step S203 shown in FIG. 4. Details are not described herein again.

S404. When the scheduling target of the trigger frame includes the station, select at least one subchannel frequency band on which a current value of the inter-NAV is equal to a preset value as an available subchannel frequency band for data transmission, and determine a frequency domain resource, used by the station for transmission, in the available subchannel frequency band based on frequency domain resource scheduling information in the trigger frame to send a data frame on the determined frequency domain resource.

In the specific implementation, when the scheduling target of the trigger frame includes the station, the station selects the at least one subchannel frequency band on which the current value of the inter-NAV is equal to the preset value as the available subchannel frequency band for data transmission to respond to the trigger frame. In this embodiment of the present invention, if the channel transmission bandwidth is 80 MHz, the channel transmission bandwidth can be divided into four 20 MHz subchannel frequency bands. One intra-NAV is set on the 80 MHz, and one inter-NAV is set on each 20 MHz subchannel frequency band. It is agreed that 0 indicates that data is allowed to be transmitted on an available subchannel frequency band, and a value other than 0 indicates that data is not allowed to be transmitted on an available subchannel frequency band. In this embodiment of the present invention, the available subchannel frequency band may be selected in two manners. A first manner is: If inter-NAVs that are set on all specified subchannel frequency bands are equal to the preset value, all the specified subchannel frequency bands may be selected as available subchannel frequency bands. A second manner is: If a specified subchannel frequency band on which an inter-NAV is equal to the preset value exists in all the specified subchannel frequency bands, the specified subchannel frequency band is selected as an available subchannel frequency band. In addition, the frequency domain resource used by the station for transmission is determined in the available subchannel frequency band based on the frequency domain resource scheduling information in the trigger frame, so that the data frame is sent on the determined frequency domain resource.

The STA1 in FIG. 2 is used as an example. It is assumed that there are four subchannel frequency bands: frequency bands 1 to 4. Initial values of an intra-NAV and all inter-NAVs that are set on the frequency bands are 0. The API is an access point associated with the STA1. If the API schedules the STA1 on the frequency bands 2 and 3, whether current values of an inter-NAV2 and an inter-NAV3 that are set on the frequency bands 2 and 3 respectively are both equal to the preset value may be determined based on the first manner. If yes, the frequency bands 2 and 3 are available subchannel frequency bands. Alternatively, whether a value equal to the preset value exists in the current values of the inter-NAV2 and the inter-NAV3 that are set on the frequency bands 2 and 3 respectively may be determined based on the first manner. For example, if the current value of the inter-NAV2 is equal to the preset value, but the current value of the inter-NAV3 is not equal to the preset value, the frequency band 2 on which the inter-NAV2 is set may be selected as an available subchannel frequency band. The station may determine the frequency domain resource, used by the station for transmission, in the available subchannel frequency band based on the frequency domain resource scheduling information in the trigger frame. For example, the available subchannel frequency bands are the frequency band 2 and the frequency band 3. The station may determine that the frequency domain resource used by the station for transmission is 4 MHz in the frequency band 2 based on a 4 MHz bandwidth resource in the frequency band 2 that is required to be used in the trigger frame, and send the data frame on the 4 MHz to respond to the trigger frame.

Optionally, a precondition for sending the data frame such as an uplink data frame on a subchannel frequency band in the channel transmission bandwidth further includes determining that current signal strength is less than a CCA threshold or an OBSS packet detection level threshold.

After performing step S402, the station may further perform a step of updating a current value of an NAV. In this embodiment of the present invention, the intra-NAV or an inter-NAV may be selected, by determining the source of the PPDU, for updating.

Optionally, if the PPDU comes from the basic service set BSS associated with the station, the PPDU is parsed to obtain a duration .

If a current value of the intra-NAV that is set on all the subchannel frequency bands in the channel transmission bandwidth is less than the duration, the current value of the intra-NAV is updated to the duration.

In the specific implementation, for the step in this embodiment of the present invention, refer to step A performed after step S202 shown in FIG. 4. Details are not described herein again.

Optional step C: Obtain a duration in the PPDU if the PPDU comes from an overlapping basic service set OBSS.

When one inter-NAV is set on each subchannel frequency band, a specified subchannel frequency band in the PPDU is obtained. If a current value of the inter-NAV on the specified subchannel frequency band is less than the duration, the current value, less than the duration, of the inter-NAV on the specified subchannel frequency band is updated to the duration.

In the specific implementation, when one inter-NAV is set on each subchannel frequency band, the specified subchannel frequency band in the PPDU is obtained. If the current value of the inter-NAV on the specified subchannel frequency band is less than the duration, the current value, less than the duration, of the inter-NAV on the specified subchannel frequency band is updated to the duration. For example, the specified subchannel frequency band in the PPDU is the frequency band 2. If the inter-NAV2 corresponding to the frequency band 2 is 4 and the duration in the PPDU is 8, the inter-NAV2 is updated to 8. If the inter-NAV2 corresponding to the frequency band 2 is 10, the inter-NAV2 is not updated.

After performing step S402, the station may further perform a step of processing a CF-END frame. In this embodiment of the present invention, whether the type of the PPDU is a CF-END frame may be determined. If yes, the current value of the intra-NAV or a current value of an inter-NAV may be updated by determining a source of the CF-END frame. In this embodiment of the present invention, the preset value may be 0.

Optionally, if a received contention free-end CF-END frame comes from the BSS, the current value of the intra-NAV that is set by the station on all the subchannel frequency bands in the channel transmission bandwidth of the BSS is updated to the preset value.

In the specific implementation, for the step in this embodiment of the present invention, refer to step B performed after step S202 shown in FIG. 4. Details are not described herein again.

Optional step D: If a received contention free-end CF-END frame comes from an overlapping basic service set OBSS, obtain a specified subchannel frequency band in the CF-END frame, and update a current value of an inter-NAV that is set on the specified subchannel frequency band, to the preset value.

In the specific implementation, if the CF-END frame comes from the OBSS, the specified subchannel frequency band, such as the subchannel frequency bands 1 and 2, may be obtained by parsing the CF-END frame. The current values of the inter-NAVs corresponding to the subchannel frequency bands 1 and 2 may be updated to the preset value 0 to clear the current values of the inter-NAVs.

Optional step E: If a received contention free-end CF-END frame comes from an overlapping basic service set OBSS, obtain a specified subchannel frequency band in the CF-END frame, and update a current value of an inter-NAV that is corresponding to the OBSS from which the CF-END frame comes and that is set on the specified subchannel frequency band, to the preset value.

In the specific implementation, if the CF-END frame comes from the OBSS2, the specified subchannel frequency band, such as the subchannel frequency bands 1 and 2, may be obtained by parsing the CF-END frame. If the current values of the inter-NAV 1 and the inter-NAV2 on the subchannel frequency bands 1 and 2 come from the OBSS1 and the OBSS2 respectively, the current value of the inter-NAV2 may be updated to the preset value 0 to clear the current value of the inter-NAV2.

In this embodiment of the present invention, the station sets one intra-NAV on all the subchannel frequency bands in the channel transmission bandwidth of the associated BSS, and sets one inter-NAV on each subchannel frequency band. When the PPDU is a trigger frame, the station may obtain the available subchannel frequency band in the specified subchannel frequency band based on the current values of the intra-NAV and the inter-NAV, and send the data frame to respond to the trigger frame. Compared with using a single NAV, this reduces interference in data transmission in an OBSS. The intra-NAV or the inter-NAV on the specified subchannel frequency band is separately updated based on the source of the PPDU or the source of the CF-END frame to avoid incorrectly updating or clearing an NAV.

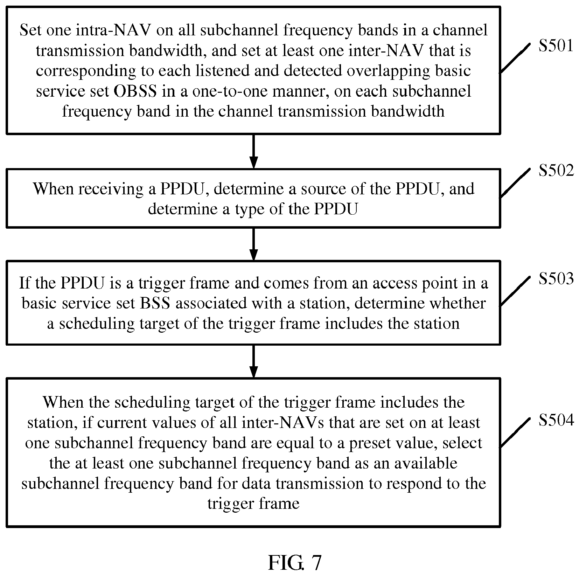

Referring to FIG. 7, FIG. 7 is a schematic flowchart of still another data transmission protection method disclosed in an embodiment of the present invention. The method includes steps S501 to S504.

S501. Set one intra-NAV on all subchannel frequency bands in the channel transmission bandwidth, and set at least one inter-NAV that is corresponding to each listened and detected overlapping basic service set OBSS in a one-to-one manner, on each subchannel frequency band in the channel transmission bandwidth.

In a specific embodiment, the station sets one intra-NAV on all the subchannel frequency bands in the channel transmission bandwidth, and sets at least one inter-NAV that is corresponding to each listened and detected overlapping basic service set OBSS in the one-to-one manner, on each subchannel frequency band in the channel transmission bandwidth. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on a subchannel frequency band on which the inter-NAV is set. For example, as shown in FIG. 2, it is assumed that the entire channel transmission bandwidth is divided into four subchannel frequency bands: frequency bands 1 to 4, and there are two OBSSs: an OBSS1 and an OBSS2. One intra-NAV and a plurality of inter-NAVs are set on the frequency bands 1 to 4. One inter-NAV corresponding to the OBSS1 and one inter-NAV corresponding to the OBSS2 are set on each frequency band. For example, an inter-NAV31 and an inter-NAV32 corresponding to the OBSS1 and the OBSS2 respectively are set on the frequency band 3. Initial values of the intra-NAV and the inter-NAVs are all 0. If the access point API in a BSS associated with the station STA1 sends a PPDU to the STA4. The STA1 may also receive the PPDU, and obtain through parsing that duration in the PPDU is 10. In this case, intra-NAV = 4 may be set. If the STA1 receives a PPDU that is sent by the STA2 in the OBSS1, that carries duration = 4, and that specifies subchannel frequency bands as frequency bands 1 and 2, inter-NAV11 = 4 and inter-NAV21 = 4 may be set. If the STA1 receives a PPDU that is sent by the STA3 in the OBSS2, that carries duration = 5, and that specifies subchannel frequency bands as frequency bands 1 to 3, inter-NAV12 = 5, inter-NAV22 = 5, and inter-NAV32 = 5 may be set.

S502. When receiving a PPDU, determine a source of the PPDU, and determine a type of the PPDU.

In a specific implementation, for step S502 in this embodiment of the present invention, refer to step S202 shown in FIG. 4. Details are not described herein again.

S503. If the PPDU is a trigger frame and comes from an access point in a basic service set BSS associated with a station, determine whether a scheduling target of the trigger frame includes the station.

In the specific implementation, for step S503 in this embodiment of the present invention, refer to step S203 shown in FIG. 4. Details are not described herein again.

S504. When the scheduling target of the trigger frame includes the station, if current values of all inter-NAVs that are set on at least one subchannel frequency band are equal to a preset value, select the at least one subchannel frequency band as an available subchannel frequency band for data transmission, and determine a frequency domain resource, used by the station for transmission, in the available subchannel frequency band based on frequency domain resource scheduling information in the trigger frame to send a data frame on the determined frequency domain resource.

In the specific implementation, when the scheduling target of the trigger frame includes the station, if the current values of all the inter-NAVs that are set on the at least one subchannel frequency band are equal to the preset value, the at least one subchannel frequency band is selected as the available subchannel frequency band to respond to the trigger frame. In this embodiment of the present invention, if there are two OBSSs: the OBSS1 and the OBSS2, and the channel transmission bandwidth is 80 MHz, the channel transmission bandwidth can be divided into four 20 MHz subchannel frequency bands. One intra-NAV is set on the 80 MHz. One inter-NAV corresponding to the OBSS1 and one inter-NAV corresponding to the OBSS2 are set on each 20 MHz subchannel frequency band. For example, an inter-NAV31 and an inter-NAV32 corresponding to the OBSS1 and the OBSS2 respectively are set on the frequency band 3. It is agreed that 0 indicates that data is allowed to be transmitted on an available subchannel frequency band, and a value other than 0 indicates that data is not allowed to be transmitted on an available subchannel frequency band. In this embodiment of the present invention, the available subchannel frequency band may be selected in two manners. A first manner is: If all inter-NAVs that are set on all specified subchannel frequency bands are equal to the preset value, all the specified subchannel frequency bands may be selected as available subchannel frequency bands. A second manner is: If at least one specified subchannel frequency band on which all inter-NAVs are equal to the preset value exists in all the specified subchannel frequency bands, the at least one specified subchannel frequency band may be selected as an available subchannel frequency band. In addition, the frequency domain resource used by the station for transmission is determined in the available subchannel frequency band based on the frequency domain resource scheduling information in the trigger frame, so that the data frame is sent on the determined frequency domain resource.

The STA1 in FIG. 2 is used as an example. It is assumed that there are two OBSSs: the OBSS1 and the OBSS2, and four subchannel frequency bands: frequency bands 1 to 4. Initial values of the intra-NAV and all inter-NAVs that are set on the frequency bands are 0. The API is an access point associated with the STA1. If the API schedules the STA1 on frequency bands 2 and 3, whether current values of the inter-NAV21, the inter-NAV22, the inter-NAV31, and the inter-NAV32 that are set on the frequency bands 2 and 3 are all equal to the preset value may be determined based on the first manner. If yes, the frequency bands 2 and 3 are determined as available subchannel frequency bands. Alternatively, whether the current values of the inter-NAV21 and the inter-NAV22 that are set on the frequency band 2 are equal to the preset value and whether the current values of the inter-NAV31 and the inter-NAV32 that are set on the frequency band 3 are equal to the preset value may be determined based on the first manner. If the current values of the inter-NAV21 and the inter-NAV22 that are set on the frequency band 2 are equal to the preset value, but the current values of the inter-NAV31 and the inter-NAV32 that are set on the frequency band 3 are not equal to the preset value, the frequency band 2 may be selected as an available subchannel frequency band. The station may determine the frequency domain resource, used by the station for transmission, in the available subchannel frequency band based on the frequency domain resource scheduling information in the trigger frame. For example, the available subchannel frequency bands are the frequency band 2 and the frequency band 3. The station may determine that the frequency domain resource used by the station for transmission is 4 MHz in the frequency band 2 based on a 4 MHz bandwidth resource in the frequency band 2 that is required to be used in the trigger frame, and send the data frame on the 4 MHz to respond to the trigger frame.

Optionally, a precondition for sending the data frame such as an uplink data frame on a subchannel frequency band in the channel transmission bandwidth further includes determining that current signal strength is less than a CCA threshold or an OBSS packet detection level threshold.

After performing step S502, the station may further perform a step of updating a current value of an NAV. In this embodiment of the present invention, the intra-NAV or an inter-NAV may be selected, by determining the source of the PPDU, for updating.

Optionally, a duration in the PPDU is obtained if the PPDU comes from the basic service set BSS associated with the station and the station is not a sending target of the PPDU.

If a current value of the intra-NAV that is set on all subchannel frequency bands in the channel transmission bandwidth is less than the duration, the current value of the intra-NAV is updated to the duration.

In the specific implementation, for the step in this embodiment of the present invention, refer to step A performed after step S202 shown in FIG. 4. Details are not described herein again.

Optional step F: Obtain a duration in the PPDU if the PPDU comes from an overlapping basic service set OBSS.

A specified subchannel frequency band in the PPDU is obtained when each listened and detected OBSS on each subchannel frequency band is corresponding to one inter-NAV. If an inter-NAV that is corresponding to the OBSS from which the PPDU comes exists on the specified subchannel frequency band, and a current value of the inter-NAV is less than the duration, the current value, less than the duration, of the inter-NAV that is corresponding to the OBSS from which the PPDU comes and that is set on the specified subchannel frequency band is updated to the duration.

In the specific implementation, for example, the station can listen and detect the OBSS1 and the OBSS2. It is assumed that the PPDU comes from the OBSS1, and the specified subchannel frequency band in the PPDU is the frequency band 4. Two inter-NAVs, namely inter-NAV41 = 4 and inter-NAV42 = 10, are set on the frequency band 4. When duration = 8 in the PPDU, the inter-NAV41 less than the duration may be updated to 8, and the inter-NAV42 and an inter-NAV on another frequency band are not updated.

After performing step S502, the station may further perform a step of processing a CF-END frame. In this embodiment of the present invention, whether the type of the PPDU is a CF-END frame may be determined. If yes, the current value of the intra-NAV or a current value of an inter-NAV may be updated by determining a source of the CF-END frame. In this embodiment of the present invention, the preset value may be 0.

Optionally, if a received contention free-end CF-END frame comes from the BSS, the current value of the intra-NAV that is set by the station on all the subchannel frequency bands in the channel transmission bandwidth of the BSS is updated to the preset value.

In the specific implementation, for the step in this embodiment of the present invention, refer to step B performed after step S202 shown in FIG. 4. Details are not described herein again.

Optional step G: If a received contention free-end CF-END frame comes from an overlapping basic service set OBSS, obtain a specified subchannel frequency band in the CF-END frame, and update current values of all inter-NAVs that are corresponding to the OBSS from which the CF-END frame comes and that are set on each specified subchannel frequency band, to the preset value.

In the specific implementation, if the CF-END frame comes from the OBSS, the specified subchannel frequency band such as the frequency band 4 may be obtained by parsing the CF-END frame. If the CF-END frame comes from the OBSS2, and the OBSS2 is corresponding to the inter-NAV42 on the frequency band 4, the current value of the inter-NAV42 may be updated to 0 to clear the current value of the inter-NAV42.

In this embodiment of the present invention, the station sets one intra-NAV on all the subchannel frequency bands in the channel transmission bandwidth of the associated BSS, and sets the at least one inter-NAV that is corresponding to each listened and detected OBSS in the one-to-one manner, on each subchannel frequency band in the channel transmission bandwidth. This not only reduces interference in an OBSS and avoids incorrectly updating or clearing an NAV, but also provides a method for clearing and updating an inter-NAV for a specific OBSS on each subchannel frequency band.

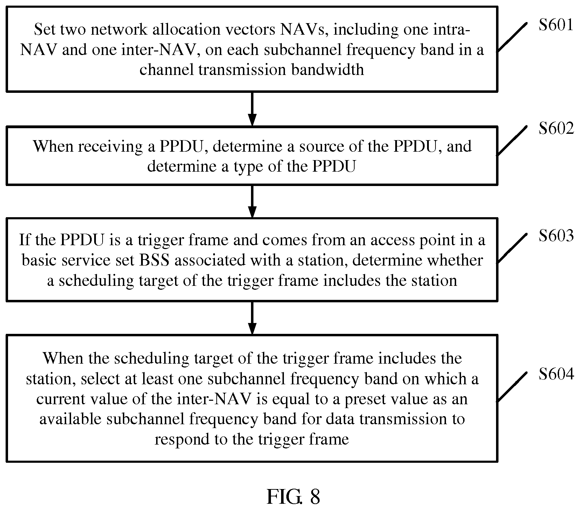

Referring to FIG. 8, FIG. 8 is a schematic flowchart of still another data transmission protection method disclosed in an embodiment of the present invention. The method includes steps S601 to S604.

S601. Set two network allocation vectors NAVs, including one intra-NAV and one inter-NAV, on each subchannel frequency band in the channel transmission bandwidth.

In a specific embodiment, the station sets two network allocation vectors NAVs, including one intra-NAV and one inter-NAV, on each subchannel frequency band in the channel transmission bandwidth. The intra-NAV is used to record duration in which the BSS forbids the station to transmit data on a subchannel frequency band on which the intra-NAV is set. The inter-NAV is used to record duration in which an OBSS listened and detected by the station forbids the station to transmit data on a subchannel frequency band on which the inter-NAV is set. For example, as shown in FIG. 2, it is assumed that the entire channel transmission bandwidth is divided into four subchannel frequency bands: frequency bands 1 to 4. Four intra-NAVs and four inter-NAVs are set on all the frequency bands. Initial values are all 0. If the access point API in a BSS associated with the STA1 sends a PPDU to the STA4, the STA1 may also receive the PPDU. If it is obtained through parsing that duration in the PPDU is 10, and specified subchannel frequency bands are frequency bands 1 and 2, intra-NAV1 = 4 and intra-NAV2 = 4 may be set. If the STA1 simultaneously receives a PPDU that is sent by the STA2 in the OBSS, that carries duration = 4, and that specifies subchannel frequency bands as frequency bands 3 and 4, inter-NAV3 = 4 and inter-NAV4 = 4 may be set.

S602. When receiving a PPDU, determine a source of the PPDU, and determine a type of the PPDU.

In a specific implementation, for step S602 in this embodiment of the present invention, refer to step S202 shown in FIG. 4. Details are not described herein again.

S603. If the PPDU is a trigger frame and comes from an access point in a basic service set BSS associated with a station, determine whether a scheduling target of the trigger frame includes the station.

In the specific implementation, for step S603 in this embodiment of the present invention, refer to step S203 shown in FIG. 4. Details are not described herein again.

S604. When the scheduling target of the trigger frame includes the station, select at least one subchannel frequency band on which a current value of the inter-NAV is equal to a preset value as an available subchannel frequency band for data transmission, and determine a frequency domain resource, used by the station for transmission, in the available subchannel frequency band based on frequency domain resource scheduling information in the trigger frame to send a data frame on the determined frequency domain resource.

In the specific implementation, for step S604 in this embodiment of the present invention, refer to step S404 shown in FIG. 6. Details are not described herein again.

After performing step S602, the station may further perform a step of updating a current value of an NAV. In this embodiment of the present invention, the intra-NAV or the inter-NAV may be selected, by determining the source of the PPDU, for updating.

Optional step H: Obtain a duration in the PPDU if the PPDU comes from the basic service set BSS associated with the station and the station is not a sending target of the PPDU.

A specified subchannel frequency band in the PPDU is obtained. If a current value of an intra-NAV that is set on the specified subchannel frequency band is less than the duration, the current value of the intra-NAV is updated to the duration.

In the specific implementation, specified subchannel frequency bands such as the frequency bands 1 and 2 are obtained by parsing the PPDU. If intra-NAV 1 = 2 and intra-NAV2 = 5 on the frequency bands 1 and 2, and duration = 4 in the PPDU, the value of the intra-NAV1 may be updated to 4, and the intra-NAV2 and an intra-NAV on another frequency band are not updated.

Optionally, if the PPDU comes from an overlapping basic service set OBSS, the PPDU is parsed to obtain a duration .

When one inter-NAV is set on each subchannel frequency band, a specified subchannel frequency band in the PPDU is obtained. If a current value of the inter-NAV on the specified subchannel frequency band is less than the duration, the current value, less than the duration, of the inter-NAV on the specified subchannel frequency band is updated to the duration.

In the specific implementation, for the step in this embodiment of the present invention, refer to step C performed after step S402 shown in FIG. 6. Details are not described herein again.

After performing step S602, the station may further perform a step of processing a CF-END frame. In this embodiment of the present invention, whether the type of the PPDU is a CF-END frame may be determined. If yes, the current value of the intra-NAV or the current value of the inter-NAV may be updated by determining a source of the CF-END frame. In this embodiment of the present invention, the preset value may be 0.

Optional step I: If a received contention free-end CF-END frame comes from the BSS, obtain a specified subchannel frequency band in the CF-END frame, and update a current value of an intra-NAV that is set by the station on the specified subchannel frequency band, to the preset value.

In the specific implementation, for example, the frequency bands 1 to 4 are corresponding to intra-NAV1 to intra-NAV4, respectively. If the received CF-END frame comes from the BSS, and it is obtained that specified subchannel frequency bands in the CF-END frame are the frequency bands 1 and 2, current values of the intra-NAV1 and the intra-NAV2 may be updated to 0 to clear the current values of the intra-NAV1 and the intra-NAV2.

Optionally, if a received contention free-end CF-END frame comes from an overlapping basic service set OBSS, a specified subchannel frequency band in the CF-END frame is obtained, and a current value of an inter-NAV that is set on the specified subchannel frequency band is updated to the preset value.

In the specific implementation, for the step in this embodiment of the present invention, refer to step D performed after step S402 shown in FIG. 6. Details are not described herein again.

Further, optionally, if the received CF-END frame comes from the OBSS, the specified subchannel frequency band in the CF-END frame is obtained. It is determined whether a source of the current value of the inter-NAV that is set by the station on the specified subchannel frequency band is the same as the source of the CF-END frame. If yes, the current value of the inter-NAV is updated to the preset value.

It is assumed that there are two OBSSs. If the CF-END frame comes from an OBSS2, and specified subchannel frequency bands are frequency bands 2 and 3, current values of an inter-NAV2 and an inter-NAV3 that are corresponding to the frequency bands 2 and 3 come from an OBSS1 and the OBSS2, respectively. Therefore, the current value of the inter-NAV3 may be updated to the preset value 0, and the current value of the inter-NAV2 is not updated. In this embodiment of the present invention, the station sets one intra-NAV and one inter-NAV on each subchannel frequency band in the channel transmission bandwidth of the associated BSS. Compared with the embodiment in FIG. 6, this not only reduces interference in an OBSS and avoids incorrectly updating or clearing an NAV, but also provides a method for clearing and updating an intra-NAV on a specific frequency band.

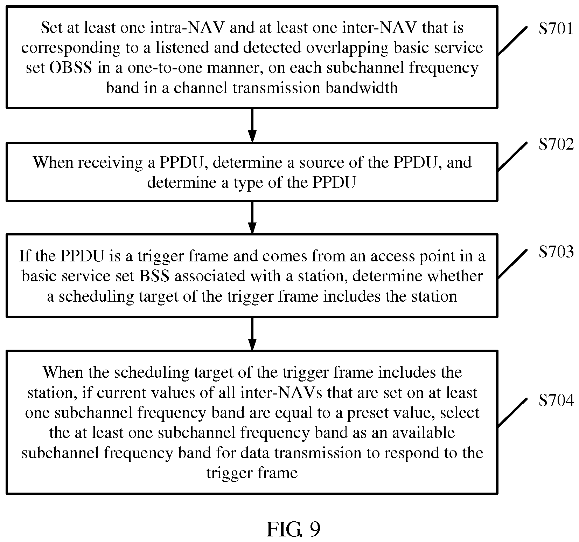

Referring to FIG. 9, FIG. 9 is a schematic flowchart of still another data transmission protection method disclosed in an embodiment of the present invention. The method includes steps S701 to S704.

S701. Set one intra-NAV and at least one inter-NAV that is corresponding to a listened and detected overlapping basic service set OBSS in a one-to-one manner, on each subchannel frequency band in the channel transmission bandwidth.

In a specific embodiment, the station sets one intra-NAV and the at least one inter-NAV that is corresponding to each listened and detected overlapping basic service set OBSS in the one-to-one manner, on each subchannel frequency band in the channel transmission bandwidth. The intra-NAV is used to record duration in which the BSS forbids the station to transmit data on a subchannel frequency band on which the intra-NAV is set. The inter-NAV is used to record duration in which an OBSS listened and detected by the station forbids the station to transmit data on a subchannel frequency band on which the inter-NAV is set. For example, as shown in FIG. 2, it is assumed that the entire channel transmission bandwidth is divided into four subchannel frequency bands: frequency bands 1 to 4. Four intra-NAVs and two inter-NAVs are set on each frequency band. Initial values are all 0. If the access point API in a BSS associated with the STA1 sends a PPDU to the STA4, the STA1 may also receive the PPDU. If it is obtained through parsing that duration in the PPDU is 10, and specified subchannel frequency bands are frequency bands 1 and 2, intra-NAV1 = 4 and intra-NAV2 = 4 may be set. If the STA1 receives a PPDU that is sent by the STA2 in an OBSS1, that carries duration = 4, and that specifies subchannel frequency bands as frequency bands 3 and 4, inter-NAV31 = 4 and inter-NAV41 = 4 may be set. If the STA1 receives a PPDU that is sent by the STA3 in an OBSS2, that carries duration = 7, and that specifies subchannel frequency bands as frequency bands 2 and 3, inter-NAV22 = 7 and inter-NAV32 =7 may be set.

S702. When receiving a PPDU, determine a source of the PPDU, and determine a type of the PPDU.

In a specific implementation, for step S702 in this embodiment of the present invention, refer to step S202 shown in FIG. 4. Details are not described herein again.

S703. If the PPDU is a trigger frame and comes from an access point in a basic service set BSS associated with a station, determine whether a scheduling target of the trigger frame includes the station.

In the specific implementation, for step S703 in this embodiment of the present invention, refer to step S203 shown in FIG. 4. Details are not described herein again.

S704. When the scheduling target of the trigger frame includes the station, if current values of all inter-NAVs that are set on at least one subchannel frequency band are equal to a preset value, select the at least one subchannel frequency band as an available subchannel frequency band for data transmission, and determine a frequency domain resource, used by the station for transmission, in the available subchannel frequency band based on frequency domain resource scheduling information in the trigger frame to send a data frame on the determined frequency domain resource.

In the specific implementation, for step S704 in this embodiment of the present invention, refer to step S504 shown in FIG. 7. Details are not described herein again.

After performing step S702, the station may further perform a step of updating a current value of an NAV. In this embodiment of the present invention, an intra-NAV or an inter-NAV may be selected, by determining the source of the PPDU, for updating.

Optionally, a duration in the PPDU is obtained if the PPDU comes from the basic service set BSS associated with the station and the station is not a sending target of the PPDU.

A specified subchannel frequency band in the PPDU is obtained. If a current value of an intra-NAV that is set on the specified subchannel frequency band is less than the duration, the current value of the intra-NAV is updated to the duration.

In the specific implementation, for the step in this embodiment of the present invention, refer to step H performed after step S602 shown in FIG. 8. Details are not described herein again.

Optionally, if the PPDU comes from an overlapping basic service set OBSS, the PPDU is parsed to obtain a duration .

A specified subchannel frequency band in the PPDU is obtained when each listened and detected OBSS on each subchannel frequency band is corresponding to one inter-NAV. If an inter-NAV that is corresponding to the OBSS from which the PPDU comes exists on the specified subchannel frequency band, and a current value of the inter-NAV is less than the duration, the current value, less than the duration, of the inter-NAV that is corresponding to the OBSS from which the PPDU comes and that is set on the specified subchannel frequency band is updated to the duration.

In the specific implementation, for the step in this embodiment of the present invention, refer to step F performed after step S502 shown in FIG. 7. Details are not described herein again.

After performing step S702, the station may further perform a step of processing a CF-END frame. In this embodiment of the present invention, whether the type of the PPDU is a CF-END frame may be determined. If yes, a current value of an intra-NAV or a current value of an inter-NAV may be updated by determining a source of the CF-END frame. In this embodiment of the present invention, the preset value may be 0.

Optionally, if a received contention free-end CF-END frame comes from the BSS, a specified subchannel frequency band in the CF-END frame is obtained, and a current value of an intra-NAV that is set by the station on the specified subchannel frequency band is updated to the preset value.

In the specific implementation, for the step in this embodiment of the present invention, refer to step I performed after step S602 shown in FIG. 6. Details are not described herein again.

Optionally, if a received contention free-end CF-END frame comes from an overlapping basic service set OBSS, a specified subchannel frequency band in the CF-END frame is obtained, and current values of all inter-NAVs that are corresponding to the OBSS from which the CF-END frame comes and that are set on each specified subchannel frequency band are updated to the preset value.

In the specific implementation, for the step in this embodiment of the present invention, refer to step G performed after step S502 shown in FIG. 6. Details are not described herein again.

In this embodiment of the present invention, the station sets one intra-NAV and at least one inter-NAV on each subchannel frequency band in the channel transmission bandwidth of the associated BSS. Compared with the embodiment in FIG. 7, this not only reduces interference in an OBSS and avoids incorrectly updating or clearing an NAV, but also provides a method for clearing and updating inter-NAVs corresponding to different OBSSs on a specific frequency band.

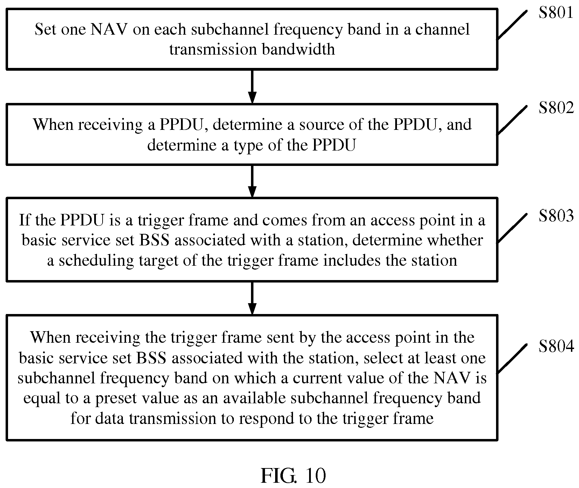

Referring to FIG. 10, FIG. 10 is a schematic flowchart of still another data transmission protection method disclosed in an embodiment of the present invention. The method includes steps S801 to S804.

S801. Set one NAV on each subchannel frequency band in the channel transmission bandwidth.

In a specific embodiment, one NAV is set on each subchannel frequency band in the channel transmission bandwidth. The NAV is used to record duration in which another station different from the station or an access point forbids the station to transmit data on a subchannel frequency band on which the NAV is set. For example, as shown in FIG. 2, it is assumed that the entire channel transmission bandwidth is divided into four subchannel frequency bands: frequency bands 1 to 4. One NAV is set on each of the frequency bands 1 to 4. That is, there are four NAVs in total. Initial values of all the NAVs are 0. If the access point API in a BSS associated with the station STA1 sends a PPDU to the STA4, the STA1 may also receive the PPDU. If it is obtained through parsing that duration in the PPDU is 10, and specified subchannel frequency bands are frequency bands 1 and 2, NAV1 = 10 and NAV2 = 10 may be set. When NAV1 = 10, if the STA1 receives a PPDU that is sent by the STA2 and that carries duration = 4, and a specified subchannel frequency band is the frequency band 1, the value of the NAV1 is not set because the duration is less than the current value of the NAV.

S802. When receiving a PPDU, determine a source of the PPDU, and determine a type of the PPDU.

In a specific implementation, for step S802 in this embodiment of the present invention, refer to step S202 shown in FIG. 4. Details are not described herein again.

S803. If the PPDU is a trigger frame and comes from an access point in a basic service set BSS associated with a station, determine whether a scheduling target of the trigger frame includes the station.

In the specific implementation, for step S803 in this embodiment of the present invention, refer to step S203 shown in FIG. 4. Details are not described herein again.

S804. When the scheduling target of the trigger frame includes the station, select at least one subchannel frequency band on which a current value of the NAV is equal to a preset value as an available subchannel frequency band for data transmission, and determine a frequency domain resource, used by the station for transmission, in the available subchannel frequency band based on frequency domain resource scheduling information in the trigger frame to send a data frame on the determined frequency domain resource.

In the specific implementation, when the trigger frame sent by the access point in the basic service set BSS associated with the station is received, the at least one subchannel frequency band on which the current value of the NAV is equal to the preset value is selected as the available subchannel frequency band for data transmission to respond to the trigger frame. In this embodiment of the present invention, it is assumed that the channel transmission bandwidth is 80 MHz. The channel transmission bandwidth can be divided into four 20 MHz subchannel frequency bands. One NAV is set on each subchannel frequency band. It is agreed that 0 indicates that data is allowed to be transmitted on an available subchannel frequency band, and a value other than 0 indicates that data is not allowed to be transmitted on an available subchannel frequency band. In this embodiment of the present invention, the available subchannel frequency band may be selected in two manners. A first manner is: If NAVs that are set on all specified subchannel frequency bands are equal to the preset value, all the specified subchannel frequency bands may be selected as available subchannel frequency bands. A second manner is: If a specified subchannel frequency band on which an inter-NAV is equal to the preset value exists in all the specified subchannel frequency bands, the specified subchannel frequency band is selected as an available subchannel frequency band. In addition, the frequency domain resource used by the station for transmission is determined in the available subchannel frequency band based on the frequency domain resource scheduling information in the trigger frame, so that the data frame is sent on the determined frequency domain resource.

The STA1 in FIG. 2 is used as an example. It is assumed that there are four subchannel frequency bands: frequency bands 1 to 4. Initial values of four NAVs that are set one all the frequency bands are 0. The AP1 is an access point associated with the STA1. If the API schedules the STA1 on frequency bands 2 and 3, whether current values of an NAV2 and an NAV3 that are set on the frequency bands 2 and 3 respectively are both equal to the preset value may be determined based on the first manner. If yes, the frequency bands 2 and 3 are determined as available subchannel frequency bands. Alternatively, whether a value equal to the preset value exists in the current values of the NAV2 and the NAV3 that are set on the frequency bands 2 and 3 respectively may be determined based on the first manner. For example, if the current value of the NAV2 is equal to the preset value, but the current value of the NAV3 is not equal to the preset value, the frequency band 2 on which the NAV2 is set may be selected as an available subchannel frequency band. The station may determine the frequency domain resource, used by the station for transmission, in the available subchannel frequency band based on the frequency domain resource scheduling information in the trigger frame. For example, the available subchannel frequency bands are the frequency band 2 and the frequency band 3. The station may determine that the frequency domain resource used by the station for transmission is 4 MHz in the frequency band 2 based on a 4 MHz bandwidth resource in the frequency band 2 that is required to be used in the trigger frame, and send the data frame on the 4 MHz to respond to the trigger frame.

In another embodiment, when the trigger frame sent by the access point in the basic service set BSS associated with the station is received, at least one subchannel frequency band on which a current value of the NAV comes from the BSS is selected as an available subchannel frequency band, and a data frame is sent to respond to the trigger frame.

In the specific implementation, when receiving the trigger frame sent by the access point in the basic service set BSS associated with the station, the station selects the at least one subchannel frequency band on which the current value of the NAV comes from the BSS as the available subchannel frequency band, and sends the data frame to respond to the trigger frame. In this embodiment of the present invention, it is assumed that the channel transmission bandwidth is 80 MHz. The channel transmission bandwidth can be divided into four 20 MHz subchannel frequency bands. One NAV is set on each subchannel frequency band. It is agreed that 0 indicates that data is allowed to be transmitted on an available subchannel frequency band, and a value other than 0 indicates that data is not allowed to be transmitted on an available subchannel frequency band. For example, if there are four frequency bands: frequency bands 1 to 4, four NAVs, namely NAV1 to NAV 4, are set correspondingly. If current values of the NAV1 and the NAV2 come from the associated BSS, and current values of the NAV3 and the NAV4 come from an OBSS, frequency bands 1 and 2 on which the NAV1 and the NAV2 are set respectively are selected as available subchannel frequency bands.

Optionally, a precondition for sending the data frame such as an uplink data frame on a subchannel frequency band in the channel transmission bandwidth further includes determining that current signal strength is less than a CCA threshold or an OBSS packet detection level threshold.

After performing step S802, the station may further perform a step of updating a current value of an NAV. In this embodiment of the present invention, whether an NAV corresponding to a specified subchannel frequency band is to be updated may be determined based on the source of the PPDU.

Optionally, a specified subchannel frequency band and a duration in the PPDU are obtained when the PPDU comes from an overlapping basic service set OBSS, or when the PPDU comes from the basic service set BSS associated with the station, and the station is not a sending target of the PPDU. If a specified subchannel frequency band on which a current value of an NAV is less than the duration exists in the specified subchannel frequency band, the current value, less than the duration, of the NAV on the specified subchannel frequency band is updated to the duration.

In the specific implementation, for example, as shown in FIG. 2, a PPDU obtained by the STA1 comes from the STA2, or the PPDU obtained by the STA1 comes from the API but a sending target does not include the STA1. It may be obtained, based on the PPDU, that specified subchannel frequency bands are frequency bands 1 and 2 and duration = 5. If current values of NAVs corresponding to the specified subchannel frequency bands are NAV1 = 3 and NAV2 = 6, the NAV1 may be updated to 5. If the PPDU is sent from a BSS associated with the STA1 and the sending target is the STA1, updating is not performed.

After performing step S802, the station may further perform a step of processing a CF-END frame. The preset value may be 0.

Optionally, if the received PPDU is a CF-END frame, a specified subchannel frequency band in the CF-END frame is obtained. If a current value of an NAV that is set on the specified subchannel frequency band has a same source as the CF-END frame, the current value of the NAV is updated to the preset value.

In the specific implementation, as shown in FIG. 2, if a CF-END frame obtained by the STA1 comes from an OBSS1, specified subchannel frequency bands are frequency bands 1 to 3, the current values of the NAV1 and the NAV2 also come from the OBSS1, and the current value of the NAV3 comes from the associated BSS, the current values of the NAV1 and the NAV2 may be updated to the preset value 0 to clear the current values of the NAVs.

The foregoing embodiment may be expanded to a processing procedure in which a CF-END frame is received when one NAV is set on the entire bandwidth. When one NAV is set on the entire bandwidth, if a CF-END frame is received and the CF-END frame comes from an OBSS, whether the OBSS from which the CF-END frame comes is the same as an OBSS from which the current value of the NAV comes is determined. If the OBSSs are the same, the current value of the NAV may be updated to the preset value 0 to clear the current value of the NAV. If the OBSSs are different, the current value of the NAV is not updated. For example, if the CF-END frame comes from an OBSS2, and the current value of the NAV also comes from the OBSS2, the current value of the NAV may be updated to the preset value 0.

In this embodiment of the present invention, the station sets one NAV on each subchannel frequency band in the channel transmission bandwidth of the associated BSS. The available subchannel frequency band in the specified subchannel frequency band may be obtained based on the current value of the NAV on each frequency band, and the uplink data frame is sent to protect data transmission. Compared with using a single NAV to control channel transmission, this avoids wasting resources of the available subchannel frequency band, and effectively improves frequency band utilization.

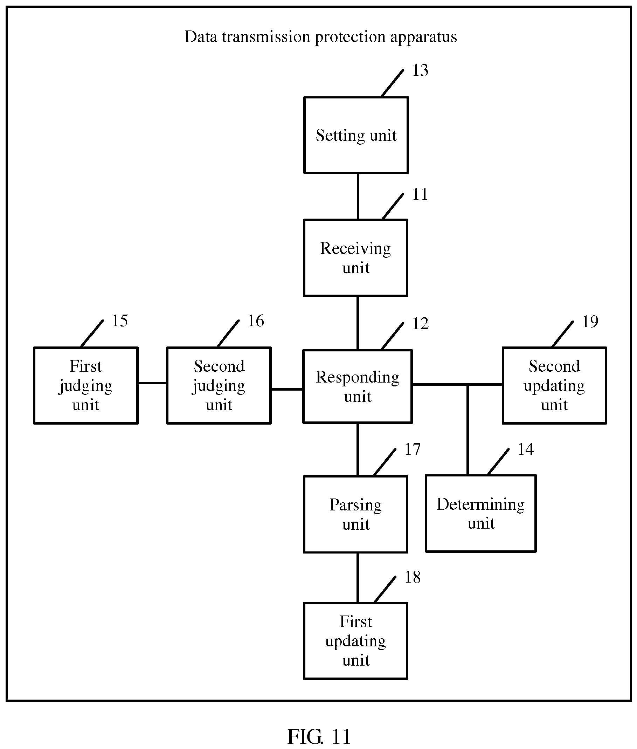

Referring to FIG. 11, FIG. 11 is a schematic modular diagram of a data transmission protection apparatus disclosed in an embodiment of the present invention. As shown in FIG. 11, the apparatus may include a receiving unit 11, a responding unit 12, a setting unit 13, a determining unit 14, a first judging unit 15, a second judging unit 16, a parsing unit 17, a first updating unit 18, and a second updating unit 19.

The receiving unit 11 is configured to receive a trigger frame sent by an access point in a basic service set BSS associated with a station.

The responding unit 12 is configured to select, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame.

Optionally, the responding unit 12 is configured to: if a scheduling target of the trigger frame includes the station, select, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame.

In another embodiment, the responding unit 12 is specifically configured to: when one inter-NAV is set on all subchannel frequency bands in the channel transmission bandwidth, if a current value of the inter-NAV that is set on all the subchannel frequency bands in the channel transmission bandwidth of the BSS is equal to a preset value, select all the subchannel frequency bands in the channel transmission bandwidth as available subchannel frequency bands for data transmission to respond to the trigger frame.

Optionally, the responding unit 12 is specifically configured to: when at least one inter-NAV that is corresponding to each listened and detected OBSS in a one-to-one manner is set on all subchannel frequency bands in the channel transmission bandwidth, if current values of all inter-NAVs that are corresponding to listened and detected OBSSs in a one-to-one manner and that are set on all the subchannel frequency bands in the channel transmission bandwidth of the BSS are equal to a preset value, select all the subchannel frequency bands in the channel transmission bandwidth as available subchannel frequency bands for data transmission to respond to the trigger frame.

Optionally, the responding unit 12 is specifically configured to: when one inter-NAV is set on each subchannel frequency band in the channel transmission bandwidth, select at least one subchannel frequency band on which a current value of the inter-NAV is equal to a preset value as an available subchannel frequency band for data transmission to respond to the trigger frame.

Optionally, the responding unit 12 is specifically configured to: when at least one inter-NAV that is corresponding to each listened and detected overlapping basic service set OBSS in a one-to-one manner is set on each subchannel frequency band in the channel transmission bandwidth, if there is at least one subchannel frequency band on which current values of all set inter-NAVs are equal to a preset value, select the at least one subchannel frequency band as an available subchannel frequency band for data transmission to respond to the trigger frame.

Optionally, responding unit 12 is configured to select at least one subchannel frequency band on which a current value of an NAV is equal to a preset value as an available subchannel frequency band for data transmission to respond to the trigger frame.

Optionally, responding unit 12 is configured to select at least one subchannel frequency band on which a current value of an NAV comes from the BSS as an available subchannel frequency band for data transmission to respond to the trigger frame.

In another embodiment, the setting unit 13 is configured to set two network allocation vectors NAVs, including one intra-NAV and one inter-NAV, on all subchannel frequency bands in the channel transmission bandwidth of the basic service set BSS associated with the station. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on all the subchannel frequency bands in the channel transmission bandwidth.

Optionally, the setting unit 13 is configured to set one intra-NAV and at least one inter-NAV that is corresponding to each listened and detected overlapping basic service set OBSS in a one-to-one manner, on all subchannel frequency bands in the channel transmission bandwidth of the basic service set BSS associated with the station. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on a subchannel frequency band on which the inter-NAV is set.

Optionally, the setting unit 13 is configured to: set one intra-NAV on all subchannel frequency bands in the channel transmission bandwidth, and set one inter-NAV on each subchannel frequency band in the channel transmission bandwidth. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on a subchannel frequency band on which the inter-NAV is set.

Optionally, the setting unit 13 is configured to: set one intra-NAV on all subchannel frequency bands in the channel transmission bandwidth, and set at least one inter-NAV that is corresponding to each listened and detected overlapping basic service set OBSS in a one-to-one manner, on each subchannel frequency band in the channel transmission bandwidth. The intra-NAV is used to record duration in which the BSS forbids the station to transmit data on all the subchannel frequency bands in the channel transmission bandwidth. The inter-NAV is used to record duration in which an OBSS listened and detected by the station forbids the station to transmit data on a subchannel frequency band on which the inter-NAV is set.

Optionally, the setting unit 13 is configured to set two network allocation vectors NAVs, including one intra-NAV and one inter-NAV, on each subchannel frequency band in the channel transmission bandwidth. The intra-NAV is used to record duration in which the BSS forbids the station to transmit data on a subchannel frequency band on which the intra-NAV is set. The inter-NAV is used to record duration in which an OBSS listened and detected by the station forbids the station to transmit data on a subchannel frequency band on which the inter-NAV is set.

Optionally, the setting unit 13 is configured to set at least one intra-NAV and at least one inter-NAV that is corresponding to a listened and detected overlapping basic service set OBSS in a one-to-one manner, on each subchannel frequency band in the channel transmission bandwidth. The intra-NAV is used to record duration in which the BSS forbids the station to transmit data on a subchannel frequency band on which the intra-NAV is set. The inter-NAV is used to record duration in which an OBSS listened and detected by the station forbids the station to transmit data on a subchannel frequency band on which the inter-NAV is set.

Optionally, the setting unit 13 is configured to set one NAV on each subchannel frequency band in the channel transmission bandwidth. The NAV is used to record duration in which another station different from the station or an access point forbids the station to transmit data on a subchannel frequency band on which the NAV is set.

When one inter-NAV is set on all the subchannel frequency bands in the channel transmission bandwidth, if a current value of the inter-NAV that is set on all the subchannel frequency bands in the channel transmission bandwidth of the BSS is equal to a preset value, all the subchannel frequency bands in the channel transmission bandwidth are selected as available subchannel frequency bands for data transmission to respond to the trigger frame. When the at least one inter-NAV that is corresponding to each listened and detected OBSS in the one-to-one manner is set on all the subchannel frequency bands in the channel transmission bandwidth, if current values of all inter-NAVs that are corresponding to listened and detected OBSSs in the one-to-one manner and that are set on all the subchannel frequency bands in the channel transmission bandwidth of the BSS are equal to a preset value, all the subchannel frequency bands in the channel transmission bandwidth are selected as available subchannel frequency bands for data transmission to respond to the trigger frame.

In another embodiment, the determining unit 14 is configured to: after the available subchannel frequency band is selected, determine a frequency domain resource, used by the station for transmission, in the available subchannel frequency band based on frequency domain resource scheduling information in the trigger frame, so that a data frame is sent on the determined frequency domain resource.

In another embodiment, the first judging unit 15 is configured to: when a PPDU is received, determine a source of the PPDU, and determine a type of the PPDU.

In another embodiment, the second judging unit 16 is configured to: if the PPDU is a trigger frame and comes from the access point in the basic service set BSS associated with the station, determine whether a scheduling target of the trigger frame includes the station.

In another embodiment, the parsing unit 17 is configured to obtain a duration in the PPDU if the PPDU comes from the basic service set BSS associated with the station and the station is not a sending target of the PPDU.

Optionally, the parsing unit 17 is configured to obtain a duration in the PPDU if the PPDU comes from an overlapping basic service set OBSS.

In another embodiment, the first updating unit 18 is configured to: if a current value of the intra-NAV that is set on all the subchannel frequency bands in the channel transmission bandwidth is less than the duration, update the current value of the intra-NAV to the duration.

Optionally, the first updating unit 18 is configured to: obtain a specified subchannel frequency band in the PPDU; and if a current value of an intra-NAV that is set on the specified subchannel frequency band is less than the duration, update the current value of the intra-NAV to the duration.

Optionally, the first updating unit 18 is configured to: when one inter-NAV is set on all the subchannel frequency bands, if the duration is greater than a current value of the inter-NAV that is set on all the subchannel frequency bands in the channel transmission bandwidth, use the duration to update the current value of the inter-NAV.

Optionally, the first updating unit 18 is configured to: when one inter-NAV is set on all the subchannel frequency bands, if a current value of the inter-NAV that is set on all the subchannel frequency bands in the channel transmission bandwidth is less than the duration, update the current value of the inter-NAV to the duration.

Optionally, the first updating unit 18 is configured to: when at least one inter-NAV that is corresponding to an OBSS listened and detected by the station in the one-to-one manner is set on all the subchannel frequency bands, if a current value of an inter-NAV that is corresponding to the OBSS from which the PPDU carrying the duration comes is less than the duration, update the inter-NAV that is corresponding to the OBSS from which the PPDU carrying the duration comes to the duration.

Optionally, the first updating unit 18 is configured to: when one inter-NAV is set on each subchannel frequency band, obtain a specified subchannel frequency band in the PPDU, and if a current value of the inter-NAV on the specified subchannel frequency band is less than the duration, update the current value, less than the duration, of the inter-NAV on the specified subchannel frequency band to the duration.

Optionally, the first updating unit 18 is configured to: obtain a specified subchannel frequency band in the PPDU when each listened and detected OBSS on each subchannel frequency band is corresponding to one inter-NAV, and if an inter-NAV that is corresponding to the OBSS from which the PPDU comes exists on the specified subchannel frequency band, and a current value of the inter-NAV is less than the duration, update the current value, less than the duration, of the inter-NAV that is corresponding to the OBSS from which the PPDU comes and that is set on the specified subchannel frequency band, to the duration.

Optionally, the first updating unit 18 is configured to: obtain a specified subchannel frequency band and a duration in the PPDU when the PPDU comes from an overlapping basic service set OBSS, or when the PPDU comes from the basic service set BSS associated with the station, and the station is not a sending target of the PPDU; and if a specified subchannel frequency band on which a current value of an NAV is less than the duration exists in the specified subchannel frequency band, update the current value, less than the duration, of the NAV on the specified subchannel frequency band to the duration.

In another embodiment, the second updating unit 19 is configured to: if a received contention free-end CF-END frame comes from the BSS, update a current value of an intra-NAV that is set by the station on all the subchannel frequency bands in the channel transmission bandwidth of the BSS, to a preset value.

Optionally, the second updating unit 19 is configured to: if a received contention free-end CF-END frame comes from the BSS, obtain a specified subchannel frequency band in the CF-END frame, and update a current value of an intra-NAV that is set by the station on the specified subchannel frequency band, to a preset value.

Optionally, the second updating unit 19 is configured to: if a received contention free-end CF-END frame comes from an overlapping basic service set OBSS, update a current value of an inter-NAV that is set by the station on all the subchannel frequency bands, to a preset value.

Optionally, the second updating unit 19 is configured to: if a received contention free-end CF-END frame comes from an overlapping basic service set OBSS, update a current value of an inter-NAV that has a same source as the CF-END frame and that is set by the station on all the subchannel frequency bands, to a preset value.

Optionally, the second updating unit 19 is configured to: if a received contention free-end CF-END frame comes from an overlapping basic service set OBSS, obtain a specified subchannel frequency band in the CF-END frame, and update a current value of an inter-NAV that is set on the specified subchannel frequency band, to a preset value.

Optionally, the second updating unit 19 is configured to: if a received contention free-end CF-END frame comes from an overlapping basic service set OBSS, obtain a specified subchannel frequency band in the CF-END frame, and update a current value of an inter-NAV that is corresponding to the OBSS from which the CF-END frame comes and that is set on the specified subchannel frequency band, to a preset value.

Optionally, the second updating unit 19 is configured to: if a received contention free-end CF-END frame comes from an overlapping basic service set OBSS, obtain a specified subchannel frequency band in the CF-END frame, and update current values of all inter-NAVs that are corresponding to the OBSS from which the CF-END frame comes and that are set on each specified subchannel frequency band, to a preset value.

Optionally, the second updating unit 19 is configured to: if the received PPDU is a contention free-end CF-END frame, obtain a specified subchannel frequency band in the CF-END frame, and if a current value of an NAV that is set on the specified subchannel frequency band has a same source as the CF-END frame, update the current value of the NAV to a preset value.

For specific description of the units, refer to the method embodiments in FIG. 3 to FIG. 10. Details are not described herein again.

In this embodiment of the present invention, the trigger frame sent by the access point in the BSS associated with the station may be received, and the current values of at least two NAVs that are set on the subchannel frequency band in the channel transmission bandwidth of the BSS are queried. The available subchannel frequency band for data transmission is selected from the channel transmission bandwidth of the BSS based on the current values of the at least two NAVs, to respond to the trigger frame. The at least two NAVs are used to control data transmission on the channel transmission bandwidth to reduce transmission interference in an OBSS caused by using one NAV. In addition, the at least two NAVs may be used to separately control data transmission on the subchannel frequency band in the channel transmission bandwidth to improve frequency band utilization.

### Supplementary Embodiment 1

Still another data transmission protection method disclosed in this embodiment of the present invention is setting one NAV and one BSS color value on all subchannel frequency bands in the channel transmission bandwidth.

In a specific embodiment, the station sets one NAV and one BSS color that is corresponding to a cell source of the NAV. The NAV is used to record duration in which the station is forbidden to transmit data on all the subchannel frequency bands in the channel transmission bandwidth. The BSS color is used to record a BSS from which a PPDU used to set the NAV comes. The BSS color may come from a BSS color carried in a SIG-A field of the PPDU, or come from a TA value carried in a MAC header of the PPDU.

When receiving a PPDU, the station determines a source of the PPDU in the following manners:
Manner 1: Determine whether a value of a BSS color in an SIG-A field of the PPDU is equal to a value of a BSS color of a local BSS. If the two values are equal, the PPDU is transmitted from the local BSS. If the two values are not equal, the PPDU is not transmitted from the local BSS.
Manner 2: Determine whether a TA value carried in a MAC header of the PPDU is equal to a MAC address of an AP associated with the station. If the two values are equal, the PPDU is transmitted from the local BSS. If the two values are not equal, the PPDU is not transmitted from the local BSS.

In addition to determining the source of the PPDU, the station further determines a granularity of a TXOP value in the SIG-A field of the PPDU. The granularity of the TXOP is used to indicate a minimum distinguished interval of the TXOP, for example, indicate that a length of the TXOP is 7 bits (B0-B6). B0 indicates a granularity unit. The value 0 represents a granularity of 8 us. The value 1 represents a granularity of 128 us. B1-B6 indicate an actual TXOP size. A TXOP range that the granularity of 8 us may indicate is (8 us * value of (B1-B6)), that is, 0-504 us. A TXOP range that the granularity of 128 us may indicate is (512 + 128 * value of (B1-B6)), that is, 512-8576 us.

If the PPDU comes from the local BSS, and a PPDU used to set or update the current NAV comes from the local BSS, when a TXOP field in the SIG-A field of the PPDU represents that a granularity of a TXOP value becomes smaller, a current value of the NAV is updated to the TXOP value in the SIG-A field of the PPDU.

Optionally, if the PPDU comes from the local BSS, and the PPDU used to set or update the current NAV comes from the local BSS, the current value of the NAV is updated to the TXOP value in the SIG-A field of the PPDU.

For example, if the PPDU comes from the local BSS, and the PPDU used to set or update the current NAV comes from the local BSS, a granularity of the currently set or updated NAV is 128 us, and the granularity of the TXOP value value in the SIG-A field of the PPDU is 8 us, the current value of the NAV is updated to the TXOP value in the SIG-A field of the PPDU.

If the PPDU comes from an OBSS, and the PPDU used to set or update the current NAV comes from the same OBSS, when the TXOP field in the SIG-A field of the PPDU represents that the granularity of the TXOP valuevalue becomes smaller, the current value of the NAV is updated to the TXOP value in the SIG-A field of the PPDU.

Optionally, if the PPDU comes from an OBSS, and the PPDU used to set or update the current NAV comes from the same OBSS, the current value of the NAV is updated to the TXOP value in the SIG-A field of the PPDU.

For example, if the PPDU comes from an OBSS1, the PPDU used to set or update the current NAV comes from the local OBSS1, the granularity of the currently set or updated NAV is 128 us, and the granularity of the TXOP valuevalue in the SIG-A field of the PPDU is 8 us, the current value of the NAV is updated to the TXOP value in the SIG-A field of the PPDU.

If a source of the PPDU is different from that of the PPDU used to set or update the current NAV, when the TXOP field in the SIG-A field of the PPDU represents that the TXOP value is greater than the current value of the NAV, the current value of the NAV is updated to the TXOP value in the SIG-A field of the PPDU, and the BSS color is updated to a BSS color value of the source of the PPDU. When the TXOP field in the SIG-A field of the PPDU represents that the TXOP value is less than or equal to the current value of the NAV, the current NAV and BSS color are not updated.

In this embodiment of the present invention, whether the source of the received PPDU is the same as that of the PPDU used to set or update the current NAV is determined. When the received PPDU has the same source as the PPDU used to set or update the current NAV, and the granularity of the TXOP valuein the SIG-A field of the PPDU becomes smaller, the current value of the NAV is updated to the TXOP value in the SIG-A field of the PPDU. Optionally, if the received PPDU has the same source as the PPDU used to set or update the current NAV, the current NAV is updated to the TXOP value in the SIG-A field of the PPDU. This flexibly controls duration of the NAV, reduces over-protection on a channel, and allows another station that sets an NAV based on a PPDU having a same source to earlier access the channel, to improve channel utilization.

### Supplementary Embodiment 2

Still another data transmission protection method disclosed in this embodiment of the present invention is setting one intra-NAV and one inter-NAV on all subchannel frequency bands in the channel transmission bandwidth.

In a specific embodiment, the station sets one intra-NAV and one inter-NAV on the channel transmission bandwidth. The intra-NAV is used to record duration in which a local BSS forbids the station to transmit data on all the subchannel frequency bands in the channel transmission bandwidth. The inter-NAV is used to record duration in which an OBSS listened and detected by the station forbids the station to transmit data on all the subchannel frequency bands in the channel transmission bandwidth.

When receiving a PPDU, the station determines a source of the PPDU in the following manners:
Manner 1: Determine whether a value of a BSS color in an SIG-A field of the PPDU is equal to a value of a BSS color of the local BSS. If the two values are equal, the PPDU is transmitted from the local BSS. If the two values are not equal, the PPDU is not transmitted from the local BSS.
Manner 2: Determine whether a TA value carried in a MAC header of the PPDU is equal to a MAC address of an AP associated with the station. If the two values are equal, the PPDU is transmitted from the local BSS. If the two values are not equal, the PPDU is not transmitted from the local BSS.

In addition to determining the source of the PPDU, the station further determines a granularity of a TXOP field in the SIG-A field of the PPDU. The granularity of the TXOP is used to indicate a minimum distinguished interval of the TXOP, for example, indicate that a length of the TXOP is 7 bits (B0-B6). B0 indicates a granularity unit. The value 0 represents a granularity of 8 us. The value 1 represents a granularity of 128 us. B1-B6 indicate an actual TXOP size. A TXOP range that the granularity of 8 us may indicate is (8 us * value of (B1-B6)), that is, 0-504 us. A TXOP range that the granularity of 128 us may indicate is (512 + 128 * value of (B1-B6)), that is, 512-8576 us.

If the PPDU comes from the local BSS, and a PPDU used to set or update the current intra-NAV comes from the local BSS, when a TXOP field in the SIG-A field of the PPDU represents that a granularity of a TXOP value becomes smaller, a current value of an intra-NAV is updated to the TXOP value in the SIG-A field of the PPDU.

Optionally, if the PPDU comes from the local BSS, and the PPDU used to set or update the current intra-NAV comes from the local BSS, the current value of the intra-NAV is updated to the TXOP value in the SIG-A field of the PPDU.

For example, if the PPDU comes from the local BSS, the PPDU used to set or update the current intra-NAV comes from the local BSS, a granularity of the currently set or updated intra-NAV is 128 us, and the granularity of the TXOP value in the SIG-A field of the PPDU is 8 us, the current value of the intra-NAV is updated to the TXOP value in the SIG-A field of the PPDU.

If the PPDU comes from an OBSS, and the PPDU used to set or update the current inter-NAV comes from the same OBSS, when the TXOP field in the SIG-A field of the PPDU represents that the granularity of the TXOP value becomes smaller, a current value of the inter-NAV is updated to the TXOP value in the SIG-A field of the PPDU.

Optionally, if the PPDU comes from an OBSS, and the PPDU used to set or update the current inter-NAV comes from the same OBSS, the current value of the inter-NAV is updated to the TXOP value in the SIG-A field of the PPDU.

For example, if the PPDU comes from an OBSS1, the PPDU used to set or update the current inter-NAV comes from the OBSS1, a granularity of the currently set or updated inter-NAV is 128 us, and the granularity of the TXOP value in the SIG-A field of the PPDU is 8 us, the current value of the inter-NAV is updated to the TXOP value in the SIG-A field of the PPDU.

If the PPDU comes from an OBSS, and the PPDU used to set or update the current inter-NAV comes from another OBSS, when the TXOP field in the SIG-A field of the PPDU represents that the TXOP value is greater than the current value of the inter-NAV, the current value of the inter-NAV is updated to the TXOP value in the SIG-A field of the PPDU, and the BSS color is updated to a BSS color value of the source of the PPDU. When the TXOP field in the SIG-A field of the PPDU represents that the TXOP value is less than or equal to the current value of the inter-NAV, the current inter-NAV and BSS color are not updated.

In this embodiment of the present invention, one inter-NAV and one intra-NAV are set to distinguish between duration in which a PPDU from the local OBSS occupies a channel and duration in which a PPDU from an OBSS occupies the channel. When the granularity of the TXOP valuevalue in the SIG-A field of the PPDU from the local BSS or the OBSS becomes smaller, the current value of the intra-NAV or the inter-NAV is updated to the TXOP value in the SIG-A field of the PPDU. This flexibly controls duration in which the station occupies the channel, reduces over-protection on the channel, and allows a station for which an NAV is set to earlier access the channel, to improve channel utilization.

### Supplementary Embodiment 3

Still another data transmission protection method disclosed in this embodiment of the present invention is setting one NAV on all subchannel frequency bands in the channel transmission bandwidth.

When receiving a PPDU, the station determines whether a TXOP field in an SIG-A field of the PPDU is a specifc value. If the TXOP field is a specific value, a current value of the NAV is updated to a preset value.

In a specific implementation, if the TXOP field in the SIG-A field of the PPDU is all 0, the current value of the NAV may be updated to 0 to clear the current value of the NAV.

In this embodiment of the present invention, the TXOP field is set to a specific value to implement an NAV resetting function, to flexibly control duration in which a channel is occupied. Channel use right is promptly released when the station does not need to occupy the channel. This allows another station for which an NAV is set to earlier access the channel, to improve channel utilization.

### Supplementary Embodiment 4

Still another data transmission protection method disclosed in this embodiment of the present invention is setting one NAV and one BSS color value on all subchannel frequency bands in the channel transmission bandwidth.

In a specific embodiment, the station sets one NAV and one BSS color that is corresponding to a cell source of the NAV. The NAV is used to record duration in which the station is forbidden to transmit data on all the subchannel frequency bands in the channel transmission bandwidth. The BSS color is used to record a source of a BSS to which a PPDU that sets the NAV belongs.

When receiving a PPDU, the station determines a source of the PPDU in the following manners:
Manner 1: Determine whether a value of a BSS color in an SIG-A field of the PPDU is equal to a value of a BSS color of a local BSS. If the two values are equal, the PPDU is transmitted from the local BSS. If the two values are not equal, the PPDU is not transmitted from the local BSS.
Manner 2: Determine whether a TA value carried in a MAC header of the PPDU is equal to a MAC address of an AP associated with the station. If the two values are equal, the PPDU is transmitted from the local BSS. If the two values are not equal, the PPDU is not transmitted from the local BSS. In addition to determining the source of the PPDU, the station further determines whether a TXOP field in the SIG-A field of the PPDU is a specific value.

If the BSS from which the PPDU comes is the same as the source recorded in the BSS color, the current NAV is updated to a preset value.

If the BSS from which the PPDU comes is different from the source recorded in the BSS color, the current NAV is not updated to the preset value.

In a specific implementation, if the TXOP field in the SIG-A field of the PPDU is all 0, the current value of the NAV may be updated to 0 to clear the current value of the NAV.

In this embodiment of the present invention, the TXOP field is set to a specific value to implement an NAV resetting function, to flexibly control duration in which a channel is occupied. Channel use right is promptly released when the station does not need to occupy the channel. This allows another station that sets an NAV based on a PPDU having a same source to earlier access the channel, to improve channel utilization.

### Supplementary Embodiment 5

Still another data transmission protection method disclosed in this embodiment of the present invention is setting one intra-NAV and one inter-NAV on all subchannel frequency bands in the channel transmission bandwidth.

In a specific embodiment, the station sets one intra-NAV and one inter-NAV on the channel transmission bandwidth. The intra-NAV is used to record duration in which a local BSS forbids the station to transmit data on all the subchannel frequency bands in the channel transmission bandwidth. The inter-NAV is used to record duration in which an OBSS listened and detected by the station forbids the station to transmit data on all the subchannel frequency bands in the channel transmission bandwidth.

When receiving a PPDU, the station determines a source of the PPDU in the following manners:
Manner 1: Determine whether a value of a BSS color in an SIG-A field of the PPDU is equal to a value of a BSS color of the local BSS. If the two values are equal, the PPDU is transmitted from the local BSS. If the two values are not equal, the PPDU is not transmitted from the local BSS.
Manner 2: Determine whether a TA value carried in a MAC header of the PPDU is equal to a MAC address of an AP associated with the station. If the two values are equal, the PPDU is transmitted from the local BSS. If the two values are not equal, the PPDU is not transmitted from the local BSS.

In addition to determining the source of the PPDU, the station further determines whether a TXOP field in the SIG-A field of the PPDU is a specific value. If the PPDU comes from the local BSS, and the TXOP field in the SIG-A field of the PPDU is a specific value, the intra-NAV is updated to a preset value. If the PPDU comes from an OBSS, and the TXOP field in the SIG-A field of the PPDU is a specific value, the inter-NAV is updated to the preset value.

In a specific implementation, if the PPDU comes from the local BSS, and the TXOP field in the SIG-A field of the PPDU is all 0, a current value of the intra-NAV may be updated to 0 to clear the current value of the intra-NAV. If the PPDU comes from an OBSS, and the TXOP field in the SIG-A field of the PPDU is all 0, a current value of the inter-NAV may be updated to 0 to clear the current value of the inter-NAV.

In this embodiment of the present invention, the TXOP field is set to a specific value to implement an NAV resetting function, to flexibly control duration in which a channel is occupied. Channel use right is promptly released when the station does not need to occupy the channel. This allows a station that sets an NAV based on a PPDU from the local BSS or the OBSS to earlier access the channel, to improve channel utilization.

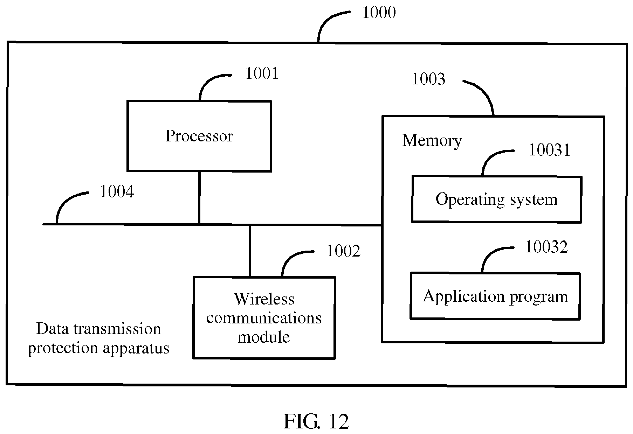

The following further describes a data transmission protection apparatus in an embodiment of the present invention. Referring to FIG. 12, FIG. 12 is a schematic structural diagram of a data transmission protection apparatus disclosed in an embodiment of the present invention. As shown in FIG. 12, the data transmission protection apparatus may include: at least one processor 1001 such as a CPU, at least one wireless communications module 1002, a memory 1003, and at least one communications bus 1004. The communications bus 1004 is configured to implement connection and communication between the components. The wireless communications module 1002 may provide a wireless network access function for the data transmission protection apparatus, and may communicate with an access point device by using Wi-Fi, Bluetooth, or the like. The memory 1003 may include a high-speed RAM memory, and may further include a nonvolatile memory (nonvolatile memory), for example, at least one disk memory. Optionally, the memory 1003 may include at least one storage apparatus that is far away from the processor 1001.

In some implementations, the memory 1003 stores the following elements: an executable module or a data structure, or a subset thereof, or an extended set thereof:
an operating system 10031, including various system programs that are used to implement various basic services and process hardware-based tasks; and
an application program 10032, including various application programs, such as a device control service program and a device identification service program, which are used to implement various application services.

Specifically, the processor 1001 is configured to invoke a program stored in the memory 1003 to perform the following operation:
when receiving a trigger frame sent by an access point in a basic service set BSS associated with a station, selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame.

In an embodiment of the present invention, before the when receiving a trigger frame sent by an access point in a basic service set BSS associated with a station, selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame, the following step is further performed:
setting two network allocation vectors NAVs, including one intra-NAV and one inter-NAV, on all subchannel frequency bands in the channel transmission bandwidth of the basic service set BSS associated with the station; or setting one intra-NAV and at least one inter-NAV that is corresponding to each listened and detected overlapping basic service set OBSS in a one-to-one manner, on all subchannel frequency bands in the channel transmission bandwidth of the basic service set BSS associated with the station, where
the intra-NAV is used to record duration in which the BSS forbids the station to transmit data on all the subchannel frequency bands in the channel transmission bandwidth, and the inter-NAV is used to record duration in which an OBSS listened and detected by the station forbids the station to transmit data on all the subchannel frequency bands in the channel transmission bandwidth.

In an embodiment of the present invention, before the when receiving a trigger frame sent by an access point in a basic service set BSS associated with a station, selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame, the following step is further performed:
setting one intra-NAV on all subchannel frequency bands in the channel transmission bandwidth, and setting one inter-NAV on each subchannel frequency band in the channel transmission bandwidth; or setting one intra-NAV on all subchannel frequency bands in the channel transmission bandwidth, and setting at least one inter-NAV that is corresponding to each listened and detected overlapping basic service set OBSS in a one-to-one manner, on each subchannel frequency band in the channel transmission bandwidth, where
the intra-NAV is used to record duration in which the BSS forbids the station to transmit data on all the subchannel frequency bands in the channel transmission bandwidth, and the inter-NAV is used to record duration in which an OBSS listened and detected by the station forbids the station to transmit data on a subchannel frequency band on which the inter-NAV is set.

In an embodiment of the present invention, before the when receiving a trigger frame sent by an access point in a basic service set BSS associated with a station, selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame, the following step is further performed:
setting two network allocation vectors NAVs, including one intra-NAV and one inter-NAV, on each subchannel frequency band in the channel transmission bandwidth; or setting one intra-NAV and at least one inter-NAV that is corresponding to a listened and detected overlapping basic service set OBSS in a one-to-one manner, on each subchannel frequency band in the channel transmission bandwidth, where
the intra-NAV is used to record duration in which the BSS forbids the station to transmit data on a subchannel frequency band on which the intra-NAV is set, and the inter-NAV is used to record duration in which an OBSS listened and detected by the station forbids the station to transmit data on a subchannel frequency band on which the inter-NAV is set.

In an embodiment, before the when receiving a trigger frame sent by an access point in a basic service set BSS associated with a station, selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame, the following step is further performed:
setting one NAV on each subchannel frequency band in the channel transmission bandwidth, where
the NAV is used to record duration in which another station different from the station or an access point forbids the station to transmit data on a subchannel frequency band on which the NAV is set.

In an embodiment, the selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame specifically includes the following step:
when one inter-NAV is set on all the subchannel frequency bands in the channel transmission bandwidth, if a current value of the inter-NAV is equal to a preset value, selecting all the subchannel frequency bands in the channel transmission bandwidth as available subchannel frequency bands for data transmission to respond to the trigger frame; or when the at least one inter-NAV that is corresponding to each listened and detected OBSS in the one-to-one manner is set on all the subchannel frequency bands in the channel transmission bandwidth, if current values of all inter-NAVs are equal to a preset value, selecting all the subchannel frequency bands in the channel transmission bandwidth as available subchannel frequency bands for data transmission to respond to the trigger frame.

In an embodiment, the selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame specifically includes the following step:
when one inter-NAV is set on each subchannel frequency band in the channel transmission bandwidth, selecting at least one subchannel frequency band on which a current value of the inter-NAV is equal to a preset value as an available subchannel frequency band for data transmission to respond to the trigger frame; or when the at least one inter-NAV that is corresponding to each listened and detected overlapping basic service set OBSS in the one-to-one manner is set on each subchannel frequency band in the channel transmission bandwidth, if there is at least one subchannel frequency band on which current values of all set inter-NAVs are equal to a preset value, selecting the at least one subchannel frequency band as an available subchannel frequency band for data transmission to respond to the trigger frame.

In an embodiment, the selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame specifically includes the following step:
selecting at least one subchannel frequency band on which a current value of the NAV is equal to the preset value as an available subchannel frequency band for data transmission to respond to the trigger frame; or selecting at least one subchannel frequency band on which a current value of the NAV comes from the BSS as an available subchannel frequency band for data transmission to respond to the trigger frame.

In an embodiment, the following step is further performed:
after selecting the available subchannel frequency band, determining a frequency domain resource, used by the station for transmission, in the available subchannel frequency band based on frequency domain resource scheduling information in the trigger frame to send a data frame on the determined frequency domain resource.

In an embodiment, before the when receiving a trigger frame sent by an access point in a basic service set BSS associated with a station, selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame, the following steps are further performed:
when receiving a PPDU, determining a source of the PPDU, and determining a type of the PPDU;
if the PPDU is a trigger frame and comes from the access point in the basic service set BSS associated with the station, determining whether a scheduling target of the trigger frame includes the station; and
if the scheduling target of the trigger frame includes the station, performing the step of selecting, from a channel transmission bandwidth of the BSS based on current values of at least two network allocation vectors NAVs that are set on a subchannel frequency band in the channel transmission bandwidth of the BSS, an available subchannel frequency band for data transmission to respond to the trigger frame.

In an embodiment, after the determining a source of the PPDU, the following steps are further performed:
obtaining a duration in the PPDU if the PPDU comes from the basic service set BSS associated with the station and the station is not a sending target of the PPDU; and
if a current value of an intra-NAV that is set on all the subchannel frequency bands in the channel transmission bandwidth is less than the duration, updating the current value of the intra-NAV to the duration; or obtaining a specified subchannel frequency band in the PPDU, and if a current value of an intra-NAV that is set on the specified subchannel frequency band is less than the duration, updating the current value of the intra-NAV to the duration.

In an embodiment, after the determining a source of the PPDU, the following steps are further performed:
obtaining a duration in the PPDU if the PPDU comes from an overlapping basic service set OBSS; and
when one inter-NAV is set on all the subchannel frequency bands, if a current value of the inter-NAV that is set on all the subchannel frequency bands in the channel transmission bandwidth is less than the duration, updating the current value of the inter-NAV to the duration; when at least one inter-NAV that is corresponding to an OBSS listened and detected by the station in the one-to-one manner is set on all the subchannel frequency bands, if a current value of an inter-NAV that is corresponding to the OBSS from which the PPDU carrying the duration comes is less than the duration, updating the inter-NAV that is corresponding to the OBSS from which the PPDU carrying the duration comes to the duration; when one inter-NAV is set on each subchannel frequency band, obtaining a specified subchannel frequency band in the PPDU, and if a current value of the inter-NAV on the specified subchannel frequency band is less than the duration, updating the current value, less than the duration, of the inter-NAV on the specified subchannel frequency band to the duration; or obtaining a specified subchannel frequency band in the PPDU when each listened and detected OBSS on each subchannel frequency band is corresponding to one inter-NAV, and if an inter-NAV that is corresponding to the OBSS from which the PPDU comes exists on the specified subchannel frequency band, and a current value of the inter-NAV is less than the duration, updating the current value, less than the duration, of the inter-NAV that is corresponding to the OBSS from which the PPDU comes and that is set on the specified subchannel frequency band, to the duration.

In an embodiment, after receiving the PPDU, the following step is further performed:
obtaining a specified subchannel frequency band and a duration in the PPDU when the PPDU comes from an overlapping basic service set OBSS, or when the PPDU comes from the basic service set BSS associated with the station, and the station is not a sending target of the PPDU; and if a specified subchannel frequency band on which a current value of an NAV is less than the duration exists in the specified subchannel frequency band, updating the current value, less than the duration, of the NAV on the specified subchannel frequency band to the duration.

In an embodiment, after the when receiving a PPDU, determining a source of the PPDU, and determining a type of the PPDU, the following step is further performed:
if a received contention free-end CF-END frame comes from the BSS, updating a current value of an intra-NAV that is set by the station on all the subchannel frequency bands in the channel transmission bandwidth of the BSS, to a preset value; or if a received contention free-end CF-END frame comes from the BSS, obtaining a specified subchannel frequency band in the CF-END frame, and updating a current value of an intra-NAV that is set by the station on the specified subchannel frequency band, to a preset value.

In an embodiment, the following step is further performed:
if a received contention free-end CF-END frame comes from an overlapping basic service set OBSS, updating a current value of an inter-NAV that is set by the station on all the subchannel frequency bands, to a preset value; or if a received contention free-end CF-END frame comes from an overlapping basic service set OBSS, updating a current value of an inter-NAV that is corresponding to the OBSS from which the CF-END frame comes and that is set by the station on all the subchannel frequency bands, to a preset value; or if a received contention free-end CF-END frame comes from an overlapping basic service set OBSS, obtaining a specified subchannel frequency band in the CF-END frame, and updating a current value of an inter-NAV that is set on the specified subchannel frequency band, to a preset value; or if a received contention free-end CF-END frame comes from an overlapping basic service set OBSS, obtaining a specified subchannel frequency band in the CF-END frame, and updating a current value of an inter-NAV that is corresponding to the OBSS from which the CF-END frame comes and that is set on the specified subchannel frequency band, to a preset value; or if a received contention free-end CF-END frame comes from an overlapping basic service set OBSS, obtaining a specified subchannel frequency band in the CF-END frame, and updating current values of all inter-NAVs that are corresponding to the OBSS from which the CF-END frame comes and that are set on each specified subchannel frequency band, to a preset value.

In an embodiment, the following step is further performed:
if the received PPDU is a contention free-end CF-END frame, obtaining a specified subchannel frequency band in the CF-END frame, and if a current value of an NAV that is set on the specified subchannel frequency band has a same source as the CF-END frame, updating the current value of the NAV to a preset value.

In this embodiment of the present invention, the trigger frame sent by the access point in the BSS associated with the station may be received. The current values of the at least two NAVs that are set on the subchannel frequency band in the channel transmission bandwidth of the BSS are queried to select the available subchannel frequency band for data transmission to respond to the trigger frame. This reduces interference in data transmission in an OBSS. In addition, NAVs are respectively set for different transmission bandwidths to avoid wasting frequency band resources and improve frequency band utilization.

The function of the intra-NAV in the embodiments of the present invention may be alternatively performed by an NAV in the prior art. That is, setting one NAV on all the subchannel frequency bands in the channel transmission bandwidth, or combining the NAV in the prior art with the inter-NAV in the embodiments, and using the related steps, execution units, or the like in the embodiments of the present invention to implement data transmission protection may be implemented. Further, a solution in which an inter-NAV is set but no intra-NAV is set and the related steps, execution units, or the like in the embodiments of the present invention are used to implement data transmission protection may be implemented.

A person of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM), a random access memory (Random Access Memory, RAM), a magnetic disk, and an optical disc.

What is disclosed above is merely example embodiments of the present invention, and certainly is not intended to limit the protection scope of the appended claims.

## Claims

1. A data transmission protection method, comprising:
setting (S201), by a station, two network allocation vectors, NAVs, including one intra-NAV and one inter-NAV, on all subchannel frequency bands in a channel transmission bandwidth of a basic service set, BSS, associated with the station;
receiving (S202), by the station, a physical layer convergence procedure protocol data unit, PPDU; and
selecting (S204), by the station, all channel transmission bandwidth as available frequency bands and determining a frequency domain resource in the all channel transmission bandwidth to send a data frame to respond to the PPDU based on a frequency domain resource scheduling information in a trigger frame when a current value of the inter-NAV is equal to 0, the PPDU includes the trigger frame sent by an access point in the basic service set, BSS, associated with the station and a scheduling target of the PPDU includes the station; and
updating a current value of the intra-NAV to 0, when the PPDU includes a received contention free-end, CF-END, frame that comes from the BSS; and
updating a current value of the inter-NAV to 0, when the PPDU includes a received contention free-end, CF-END, frame that comes from an overlapping basic service set, OBSS;
wherein the intra-NAV is used to record duration in which the BSS forbids the station to transmit data on the all channel transmission bandwidth, and the inter-NAV is used to record duration in which a OBSS forbids the station to transmit data on the all channel transmission bandwidth.

2. The method according to claim 1, the method further comprises,
obtaining a duration in the PPDU; and
updating a current value of the intra-NAV to the duration, when the current value of the intra-NAV is less than the duration and a scheduling target of the PPDU does not comprises the station.

3. The method according to claim 1, the method further comprises,
obtaining a duration in the PPDU; and
updating the current value of the inter-NAV to the duration, when a current value of the inter-NAV is less than the duration and the PPDU comes from the OBSS.

4. The method according to claim 1, wherein that the scheduling target of the trigger frame includes the station comprises:
a station identifier in resource indication information in a MAC field of the trigger frame is matched with an AID value that is configured by the AP during association.

5. A data transmission protection apparatus, comprising:
a setting unit (13), configured to set two network allocation vectors, NAVs, including one intra-NAV and one inter-NAV, on all subchannel frequency bands in a channel transmission bandwidth of a basic service set, BSS, associated with the apparatus; and
a receiving unit (11), configured to receive a PPDU; and
a responding unit (12), configured to select, all channel transmission bandwidth as available frequency bands and determine a frequency domain resource in the all channel transmission bandwidth to send a data frame to respond to the PPDU based on a frequency domain resource scheduling information in a trigger frame when a current value of the inter-NAV is equal to 0, the PPDU includes the trigger frame sent by an access point in the basic service set, BSS, associated with the apparatus and a scheduling target of the PPDU includes the apparatus;
an updating unit (19), configured to update a current value of the intra-NAV to 0, when the PPDU is a received contention free-end, CF-END, frame comes from the BSS;
the updating unit (19), configured to update a current value of the inter-NAV to 0, when the PPDU is a received contention free-end, CF-END, frame comes from an OBSS;
wherein the intra-NAV is used to record duration in which the BSS forbids the station to transmit data on the all channel transmission bandwidth, and the inter-NAV is used to record duration in which a OBSS forbids the station to transmit data on the all channel transmission bandwidth.

6. The apparatus according to claim 5, the apparatus further comprises, a parsing unit (17), configured to obtain a duration in the PPDU; and an updating unit (18), configured to update a current value of the intra-NAV to the duration, when the current value of the intra-NAV is less than the duration and a scheduling target of the PPDU does not comprises the station.

7. The apparatus according to claim 5, the apparatus further comprises, a parsing unit (17), configured to obtain a duration in the PPDU; and an updating unit (18), configured to update the current value of the inter-NAV to the duration, when a current value of the inter-NAV is less than the duration and the PPDU comes from OBSS.

8. The apparatus according to claim 5, wherein that the scheduling target of the trigger frame includes the apparatus comprises:
an apparatus identifier in resource indication information in a MAC field of the trigger frame is matched with an AID value that is configured by the AP during association.

9. A computer-readable storage medium comprising instructions which, when executed by a computer, cause the computer to carry out a method of any one of claims 1 to 4.

## Patentansprüche

1. Datenübertragungsschutzverfahren, umfassend:
Einstellen (S201), durch eine Station, von zwei Netzbelegungsvektoren ("Network Allocation Vectors", NAVs), die einen intra-NAV und einen inter-NAV aufweisen, auf alle Teilkanalfrequenzbänder in einer Kanalübertragungsbandbreite einer Basisdienstgruppe ("Basic Service Set", BSS), die der Station zugeordnet ist;
Empfangen (S202), in der Station, einer Prozessprotokolldateneinheit ("Procedure Protocol Data Unit", PPDU) für eine Datenübertragungsschichtkonvergenz; und
Auswählen (S204), durch die Station, der gesamten Kanalübertragungsbandbreite als verfügbare Frequenzbänder, und Ermitteln einer Frequenzbereichsressource in der gesamten Kanalübertragungsbandbreite zum Senden eines Datenframes, um aufgrund einer Planungsinformation einer Frequenzbereichsressource in einem Triggerframe auf die PPDU zu antworten, wenn ein aktueller Wert des inter-NAV gleich 0 ist, die PPDU den Triggerframe enthält, der von einem Zugangspunkt in der Basisdienstgruppe, BSS, gesendet wird, die der Station zugeordnet ist, und ein Planungsziel der PPDU die Station aufweist; und
Aktualisieren eines aktuellen Werts des intra-NAV auf 0, wenn die PPDU einen empfangenen konfliktfreien Frame ("Contention Free-End frame", CF-END-Frame) aufweist, der von der BSS kommt; und
Aktualisieren eines aktuellen Werts des inter-NAV auf 0, wenn die PPDU einen empfangenen konfliktfreien Frame ("Contention Free-End frame", CF-END-Frame) aufweist, der von einer überlappenden Basisdienstgruppe ("Overlapping Basic Service Set", OBSS) kommt;
wobei der intra-NAV verwendet wird, um eine Dauer aufzuzeichnen, in der die BSS der Station verbietet, Daten auf der gesamten Kanalübertragungsbandbreite zu übertragen, und wobei der inter-NAV verwendet wird, um eine Dauer aufzuzeichnen, in der die OBSS der Station verbietet, Daten auf der gesamten Kanalübertragungsbandbreite zu übertragen.

2. Verfahren nach Anspruch 1, wobei das Verfahren außerdem umfasst,
Erhalten einer Dauer in der PPDU; und
Aktualisieren eines aktuellen Werts des intra-NAV auf die Dauer, wenn der aktuelle Wert des intra-NAV geringer als die Dauer ist und kein Planungsziel der PPDU die Station umfasst.

3. Verfahren nach Anspruch 1, wobei das Verfahren außerdem umfasst:
Erhalten einer Dauer in der PPDU; und
Aktualisieren des aktuellen Werts des inter-NAV auf die Dauer, wenn ein aktueller Wert des inter-NAV geringer als die Dauer ist und die PPDU von der OBSS kommt.

4. Verfahren nach Anspruch 1, wobei das Merkmal, dass das Planungsziel des Triggerframes die Station aufweist, umfasst, dass eine Stationskennung in Ressourcenanzeigeinformationen in einem MAC-Feld des Triggerframes mit einem AID-Wert übereinstimmt, der von dem AP während der Zuordnung konfiguriert wird.

5. Datenübertragungsschutzvorrichtung, umfassend:
eine Einstelleinheit (13), die konfiguriert ist zum Einstellen von zwei Netzbelegungsvektoren ("Network Allocation Vectors", NAVs), die einen intra-NAV und einen inter-NAV aufweisen, auf alle Teilkanalfrequenzbänder in einer Kanalübertragungsbandbreite einer Basisdienstgruppe ("Basic Service Set", BSS), die der Vorrichtung zugeordnet ist; und
eine Empfangseinheit (11), die konfiguriert ist zum Empfangen einer PPDU; und
eine Antworteinheit (12), die konfiguriert ist zum Auswählen der gesamten Kanalübertragungsbandbreite als verfügbare Frequenzbänder und zum Ermitteln einer Frequenzbereichsressource in der gesamten Kanalübertragungsbandbreite zum Senden eines Datenframes, um aufgrund einer Planungsinformation einer Frequenzbereichsressource in einem Triggerframe auf die PPDU zu antworten, wenn ein aktueller Wert des inter-NAV gleich 0 ist, die PPDU den Triggerframe enthält, der von einem Zugangspunkt in der Basisdienstgruppe, BSS, gesendet wird, die der Vorrichtung zugeordnet ist, und ein Planungsziel der PPDU die Vorrichtung, aufweist; und
eine Aktualisierungseinheit (19), die konfiguriert ist zum Aktualisieren eines aktuellen Werts des intra-NAV auf 0, wenn die PPDU ein empfangener konfliktfreier Frame ("Contention Free-End frame", CF-END-Frame) ist, der von der BSS kommt; und
wobei die Aktualisierungseinheit (19) konfiguriert ist zum Aktualisieren eines aktuellen Werts des inter-NAV auf 0, wenn die PPDU ein empfangener konfliktfreier Frame ("Contention Free-End frame", CF-END-Frame) ist, der von der OBSS kommt;
wobei der intra-NAV verwendet wird, um eine Dauer aufzuzeichnen, in der die BSS der Station verbietet, Daten auf der gesamten Kanalübertragungsbandbreite zu übertragen, und wobei der inter-NAV verwendet wird, um eine Dauer aufzuzeichnen, in der die OBSS der Station verbietet Daten auf der gesamten Kanalübertragungsbandbreite zu übertragen.

6. Vorrichtung nach Anspruch 5, wobei die Vorrichtung außerdem umfasst,
eine Analyseeinheit (17), die konfiguriert ist zum Erhalten einer Dauer in der PPDU; und
eine Aktualisierungseinheit (18), die konfiguriert ist zum Aktualisieren eines aktuellen Werts des intra-NAV auf die Dauer, wenn der aktuelle Wert des intra-NAV geringer als die Dauer ist und ein Planungsziel der PPDU die Station nicht umfasst.

7. Vorrichtung nach Anspruch 5, wobei die Vorrichtung außerdem umfasst,
eine Analyseeinheit (17), die konfiguriert ist zum Erhalten einer Dauer in der PPDU; und
eine Aktualisierungseinheit (18), die konfiguriert ist zum Aktualisieren des aktuellen Werts des inter-NAV auf die Dauer, wenn ein aktueller Wert des inter-NAV geringer als die Dauer ist und die PPDU von der OBSS kommt.

8. Vorrichtung nach Anspruch 5, wobei das Merkmal, dass das Planungsziel des Triggerframes die Vorrichtung, aufweist, umfasst, dass eine Vorrichtungskennung in Ressourcenanzeigeinformationen in einem MAC-Feld des Triggerframes mit einem AID-Wert übereinstimmt, der von dem AP während der Zuordnung konfiguriert wird.

9. Computerlesbares Speichermedium, das Befehle umfasst, die, wenn sie von einem Computer ausgeführt werden, den Computer veranlassen, ein Verfahren nach einem der Ansprüche 1 bis 4 auszuführen.

## Revendications

1. Procédé de protection de transmission de données, comprenant les étapes consistant à :
définir (S201), par une station, deux vecteurs d'affectation de réseau (NAV) qui incluent un intra-NAV et un inter-NAV, sur toutes les bandes de fréquences de sous-canaux dans une bande passante de transmission de canaux d'un ensemble de services de base (BSS) associé à la station ;
recevoir (S202), par la station, une unité de données de protocole de procédure (PPDU) de convergence de couche physique ; et
sélectionner (S204), par la station, la totalité de la bande passante de transmission de canaux en tant que bandes de fréquences disponibles et déterminer une ressource de domaine fréquentiel dans la totalité de la bande passante de transmission de canaux pour envoyer une trame de données pour répondre à la PPDU sur la base d'une information de planification de ressource de domaine fréquentiel dans une trame de déclenchement quand une valeur actuelle de l'inter-NAV est égale à 0, la PPDU incluant la trame de déclenchement envoyée par un point d'accès dans l'ensemble de services de base (BSS) associé à la station, et une cible de planification de la PPDU incluant la station ; et
mettre à jour une valeur actuelle de l'intra-NAV à 0 quand la PPDU inclut une trame d'extrémité exempte de conflit (CF-END) reçue qui provient du BSS ; et
mettre à jour une valeur actuelle de l'inter-NAV à 0 quand la PPDU inclut une trame d'extrémité exempte de conflit (CF-END) reçue qui provient d'un ensemble de services de base chevauchant (OBSS) ;
l'intra-NAV étant utilisé pour enregistrer une durée pendant laquelle le BSS interdit à la station de transmettre des données sur la totalité de la bande passante de transmission de canaux, et l'inter-NAV étant utilisé pour enregistrer une durée pendant laquelle un OBSS interdit à la station de transmettre des données sur la totalité de la bande passante de transmission de canaux.

2. Procédé selon la revendication 1, le procédé comprenant en outre les étapes consistant à :
obtenir une durée dans la PPDU ; et
mettre à jour une valeur actuelle de l'intra-NAV à la durée quand la valeur actuelle de l'intra-NAV est inférieure à la durée et quand une cible de planification de la PPDU ne comprend pas la station.

3. Procédé selon la revendication 1, le procédé comprenant en outre les étapes consistant à :
obtenir une durée dans la PPDU ; et
mettre à jour la valeur actuelle de l'inter-NAV à la durée quand une valeur actuelle de l'inter-NAV est inférieure à la durée et quand la PPDU provient de l'OBSS.

4. Procédé selon la revendication 1, dans lequel le fait que la cible de planification de la trame de déclenchement inclut la station comprend le fait que :
un identifiant de station dans une information d'indication de ressources dans un champ MAC de la trame de déclenchement est mis en concordance avec une valeur AID qui est configurée par l'AP pendant une association.

5. Appareil de protection de transmission de données, comprenant :
une unité de définition (13), configurée pour définir deux vecteurs d'affectation de réseau (NAV) qui incluent un intra-NAV et un inter-NAV, sur toutes les bandes de fréquences de sous-canaux dans une bande passante de transmission de canaux d'un ensemble de services de base (BSS) associé à l'appareil ; et
une unité de réception (11), configurée pour recevoir une PPDU ; et
une unité de réponse (12), configurée pour sélectionner la totalité de la bande passante de transmission de canaux en tant que bandes de fréquences disponibles et pour déterminer une ressource de domaine fréquentiel dans la totalité de la bande passante de transmission de canaux pour envoyer une trame de données pour répondre à la PPDU sur la base d'une information de planification de ressource de domaine fréquentiel dans une trame de déclenchement quand une valeur actuelle de l'inter-NAV est égale à 0, la PPDU incluant la trame de déclenchement envoyée par un point d'accès dans l'ensemble de services de base (BSS) associé à l'appareil, et une cible de planification de la PPDU incluant l'appareil ;
une unité de mise à jour (19), configurée pour mettre à jour une valeur actuelle de l'intra-NAV à 0 quand la PPDU est une trame d'extrémité exempte de conflit (CF-END) reçue qui provient du BSS ;
l'unité de mise à jour (19) étant configurée pour mettre à jour une valeur actuelle de l'inter-NAV à 0 quand la PPDU est une trame d'extrémité exempte de conflit (CF-END) reçue qui provient d'un OBSS ;
l'intra-NAV étant utilisé pour enregistrer une durée pendant laquelle le BSS interdit à la station de transmettre des données sur la totalité de la bande passante de transmission de canaux, et l'inter-NAV étant utilisé pour enregistrer une durée pendant laquelle un OBSS interdit à la station de transmettre des données sur la totalité de la bande passante de transmission de canaux.

6. Appareil selon la revendication 5, l'appareil comprenant en outre :
une unité d'analyse (17), configurée pour obtenir une durée dans la PPDU ; et
une unité de mise à jour (18), configurée pour mettre à jour une valeur actuelle de l'intra-NAV à la durée quand la valeur actuelle de l'intra-NAV est inférieure à la durée et quand une cible de planification de la PPDU ne comprend pas la station.

7. Appareil selon la revendication 5, l'appareil comprenant en outre :
une unité d'analyse (17), configurée pour obtenir une durée dans la PPDU ; et
une unité de mise à jour (18), configurée pour mettre à jour la valeur actuelle de l'inter-NAV à la durée quand une valeur actuelle de l'inter-NAV est inférieure à la durée et quand la PPDU provient de l'OBSS.

8. Appareil selon la revendication 5, dans lequel le fait que la cible de planification de la trame de déclenchement inclut l'appareil comprend le fait que :
un identifiant d'appareil dans une information d'indication de ressources dans un champ MAC de la trame de déclenchement est mis en concordance avec une valeur AID qui est configurée par l'AP pendant une association.

9. Support de stockage lisible par ordinateur comprenant des instructions qui, lorsqu'elles sont exécutées par un ordinateur, amènent l'ordinateur à réaliser un procédé selon l'une quelconque des revendications 1 à 4.
